# EUROPEAN PATENT APPLICATION

(11) **EP 4 654 033 A1**
(43) Date of publication of application: **26.11.2025**
(21) Application number: 24777777.4
(22) Date of filing: 18.03.2024
(51) Int. Cl.: G06F 13/28, G06F 9/54

(54) **COMMUNICATION METHOD, APPARATUS AND SYSTEM, AND STORAGE MEDIUM**

(30) Priority: 27.03.2023 CN 202310347950
(71) Applicant: Huawei Technologies Co., Ltd., Shenzhen, Guangdong 518129 (CN)
(72) Inventor: SHEN, Huijun, Changsha, Hunan 410082 (CN); CHEN, Guo, Changsha, Hunan 410082 (CN); LI, Bojie, Shenzhen, Guangdong 518129 (CN)
(74) Representative: Körber, Martin Hans
(86) International application number: PCT/CN2024/082185
(87) International publication number: WO 2024/198988

(57) **Abstract**

This application discloses a communication method, apparatus, and system, and a storage medium, to improve access efficiency. This application belongs to the communication field. The method includes: A first device receives a first access request sent by a second device. The first access request includes identification information of a first virtual memory page in the first device. The first virtual memory page is a virtual memory page corresponding to to-be-accessed first data. The first virtual memory page is not associated with a physical memory page corresponding to the first data. The first device sends first information to the second device based on the identification information. The first information indicates that a page fault occurs on the first virtual memory page. The first device receives an exception handling request that is sent by the second device based on the first information. The first device allocates, in a memory of the first device based on the exception handling request, a first physical memory page associated with the first virtual memory page. The first physical memory page is a physical memory page corresponding to the first data. The first device sends, to the second device, a first access result of accessing the first physical memory page. Through this application, access efficiency can be improved.

## Description

This application claims priority to Chinese Patent Application No. 202310347950.0, filed on March 27, 2023 and entitled "COMMUNICATION METHOD, APPARATUS, AND SYSTEM, AND STORAGE MEDIUM", which is incorporated herein by reference in its entirety.

### TECHNICAL FIELD

This application relates to the communication field, and in particular, to a communication method, apparatus, and system, and a storage medium.

### BACKGROUND

The remote direct memory access (remote direct memory access, RDMA) technology is generated to resolve an access delay between two devices. The two devices are a first device and a second device. The second device may directly access a memory of the first device by using the RDMA technology, to reduce a time needed for accessing the first device.

A network interface card of the first device receives a first access request sent by the second device. The first access request includes identification information of a to-be-accessed virtual memory page. The virtual memory page belongs to the first device. When it is determined, based on the identification information, that the memory of the first device includes a physical memory page associated with the virtual memory page, the network interface card of the first device accesses the physical memory page to obtain an access result. The physical memory page is used to store data corresponding to the virtual memory page. The network interface card of the first device sends a first access response to the second device. The first access response includes the access result.

When the memory of the first device does not include a physical memory page associated with the virtual memory page, a page fault occurs on the virtual memory page, and the network interface card of the first device stops accessing the virtual memory page and requests the first device to process the page fault. However, it takes a long time for the second device to find the page fault, and the second device re-accesses the virtual memory page only after finding the page fault, resulting in low access efficiency.

### SUMMARY

This application provides a communication method, apparatus, and system, and a storage medium, to improve access efficiency and improve access efficiency. The technical solutions are as follows.

According to a first aspect, this application provides a communication method. In the method, a first device receives a first access request sent by a second device. The first access request includes identification information of a first virtual memory page in the first device. The first virtual memory page is a virtual memory page corresponding to first data to be accessed by the second device. The first virtual memory page is not associated with a physical memory page corresponding to the first data. The first device sends first information to the second device based on the identification information. The first information indicates that a page fault occurs on the first virtual memory page. The first device receives an exception handling request that is sent by the second device based on the first information. The first device allocates, based on the exception handling request, a first physical memory page that is associated with the first virtual memory page and that is in a memory of the first device. The first physical memory page is a physical memory page corresponding to the first data. The first device sends, to the second device, a first access result of accessing the first physical memory page.

The first device sends the first information to the second device based on the identification information. The first information indicates that the page fault occurs on the first virtual memory page. In this way, the second device finds, in time based on the first information, that the page fault occurs on the first virtual memory page, and sends the exception handling request to the first device. The first device processes the page fault based on the exception handling request, associates the first virtual memory page with the first physical memory page corresponding to the first data, and accesses the first physical memory page associated with the first virtual memory page. The first device sends, to the second device, the access result of accessing the first physical memory page, to improve access efficiency.

In a possible implementation, the first access request is a read request, the memory includes a first shared physical memory page, the first virtual memory page is associated with the first shared physical memory page, the first shared physical memory page is not a physical memory page corresponding to the first data, and the first shared physical memory page stores the first information. The first device reads the first information from the first shared physical memory page based on the identification information. The first device sends the first information to the second device. Because the first device reads the first information from the first shared physical memory page based on the identification information, the first device cannot sense the page fault on the first virtual memory page, thereby avoiding suspension of communication between the first device and the second device.

In another possible implementation, the memory further includes a second shared physical memory page, the first virtual memory page is further associated with the second shared physical memory page, and the second shared physical memory page is not a physical memory page corresponding to the first data. The first device receives a write request sent by the second device. The write request includes the identification information of the first virtual memory page and the first data. The first device writes the first data into the second shared physical memory page based on the identification information. The first device sends a write success response to the second device. The first information further indicates that the write success response is unexpected. In this way, when the page fault occurs on the first virtual memory page, the second device determines, based on the first information, whether the first data is successfully written into the first virtual memory page.

In another possible implementation, the memory includes a first shared physical memory page, the first virtual memory page is associated with the first shared physical memory page, and the first shared physical memory page is not a physical memory page corresponding to the first data. The first device obtains a first version number of the first virtual memory page based on the identification information. The first version number indicates the first shared physical memory page associated with the first virtual memory page. The first device sends the first information to the second device. The first information includes the first version number. Because the first version number indicates the first shared physical memory page associated with the first virtual memory page, it is ensured that the second device can detect the page fault on the first virtual memory page in time based on the first version number.

In another possible implementation, the first device receives a second access request sent by the second device, the second access request includes identification information of a second virtual memory page in the first device, the second virtual memory page is a virtual memory page corresponding to second data to be accessed by the second device, and the second virtual memory page is associated with a second physical memory page that corresponds to the second data and that is included in the memory. The first device obtains, based on the identification information of the second virtual memory page, a second version number, a second access result of accessing the second physical memory page, and a third version number. The second version number is a version number of the second virtual memory page before the second physical memory page is accessed. The third version number is a version number of the second virtual memory page after the second physical memory page is accessed. The first device sends second information to the second device. The second information includes the second version number, the second access result, and the third version number.

The second version number may indicate a physical memory page associated with the second virtual memory page before the second physical memory page is accessed. The third version number may indicate a physical memory page associated with the second virtual memory page after the second physical memory page is accessed. In this way, the second device determines, based on the second version number and the third version number, whether the second access result is unexpected.

In another possible implementation, in a process in which the first device accesses the second physical memory page, the first device replaces, with the first shared physical memory page, the second physical memory page associated with the second virtual memory page, and obtains a third version number of the second virtual memory page through addition based on the second version number. In this way, it is ensured that the version number of the second virtual memory page indicates the physical memory page associated with the second virtual memory page.

In another possible implementation, the memory further includes a third physical memory page, the third physical memory page is a physical memory page corresponding to the first data, and the first virtual memory page is associated with the third physical memory page. When releasing the third physical memory page, the first device replaces, with the first shared physical memory page, the third physical memory page associated with the first virtual memory page. In this way, even if the page fault occurs on the first virtual memory page, because the first virtual memory page is associated with the first shared physical memory page, when the first device receives an access request for the first virtual memory page, the first device can be prevented from sensing the page fault.

According to a second aspect, this application provides a communication method. In the method, a second device sends a first access request to a first device. The first access request includes identification information of a first virtual memory page in the first device. The first virtual memory page is a virtual memory page corresponding to first data to be accessed by the second device. The first virtual memory page is not associated with a physical memory page corresponding to the first data. The second device receives first information sent by the first device based on the identification information. The first information indicates that a page fault occurs on the first virtual memory page. The second device sends an exception handling request to the first device based on the first information. The exception handling request is used to request the first device to allocate, in a memory of the first device, a first physical memory page associated with the first virtual memory page. The first physical memory page is a physical memory page corresponding to the first data. The second device receives a first access result that is of accessing the first physical memory page and that is sent by the first device.

The second device receives the first information sent by the first device based on the identification information. The first information indicates that the page fault occurs on the first virtual memory page. In this way, the second device finds, in time based on the first information, that the page fault occurs on the first virtual memory page, and sends the exception handling request to the first device to request the first device to process the page fault. The first virtual memory page is associated with the first physical memory page corresponding to the first data. The first device accesses the first physical memory page associated with the first virtual memory page. The second device receives the access result that is of accessing the first physical memory page and that is sent by the first device, to improve access efficiency.

In a possible implementation, the first access request is a read request, the memory includes a first shared physical memory page, the first virtual memory page is associated with the first shared physical memory page, the first shared physical memory page is not a physical memory page corresponding to the first data, the first shared physical memory page stores the first information, and the first information is read by the first device from the first shared physical memory page.

Because the first virtual memory page is associated with the first shared physical memory page, and the first device reads the first information from the first shared physical memory page, the first device cannot sense the page fault on the first virtual memory page, thereby avoiding suspension of communication between the first device and the second device.

In another possible implementation, the memory further includes a second shared physical memory page, the first virtual memory page is associated with the second shared physical memory page, and the second shared physical memory page is not a physical memory page corresponding to the first data. The second device sends a write request to the first device. The write request includes the identification information of the first virtual memory page and the first data. The second device receives a write success response sent by the first device. The write success response indicates that the first device successfully writes the first data into the second shared physical memory page. The second device determines, based on the first information, that the write success response is unexpected. In this way, when the first data is written, it can also be ensured that the first device obtains the first information, and it is ensured that the second device finds the page fault on the first virtual memory page in time.

In another possible implementation, the memory includes a first shared physical memory page, the first virtual memory page is associated with the first shared physical memory page, the first shared physical memory page is not a physical memory page corresponding to first data, the first information includes a first version number of the first virtual memory page, and the first version number indicates the first shared physical memory page associated with the first virtual memory page. The second device sends the exception handling request to the first device when it is determined, based on the first version number, that the page fault occurs on the first virtual memory page. Because the first version number indicates the first shared physical memory page associated with the first virtual memory page, it is ensured that the second device can detect the page fault on the first virtual memory page in time based on the first version number.

In another possible implementation, the second device sends a second access request to the first device, the second access request includes identification information of a second virtual memory page in the first device, the second virtual memory page is a virtual memory page corresponding to second data to be accessed by the second device, and the second virtual memory page is associated with a second physical memory page that corresponds to the second data and that is in the memory. The second device receives second information sent by the first device. The second information includes a second version number, a second access result of accessing the second physical memory page by the first device, and a third version number. The second version number is a version number of the second virtual memory page before the first device accesses the second physical memory page. The third version number is a version number of the second virtual memory page after the first device accesses the second physical memory page. The second version number may indicate a physical memory page associated with the second virtual memory page before the second physical memory page is accessed. The third version number may indicate a physical memory page associated with the second virtual memory page after the second physical memory page is accessed. In this way, the second device determines, based on the second version number and the third version number, whether the second access result is unexpected.

According to a third aspect, this application provides a communication apparatus, configured to perform the method according to the first aspect or any possible implementation of the first aspect. Specifically, the apparatus includes units configured to perform the method according to the first aspect or any possible implementation of the first aspect.

According to a fourth aspect, this application provides a communication apparatus, configured to perform the method according to the second aspect or any possible implementation of the second aspect. Specifically, the apparatus includes units configured to perform the method according to the second aspect or any possible implementation of the second aspect.

According to a fifth aspect, this application provides a communication apparatus, including at least one processor and a memory. The at least one processor is configured to: couple to the memory, and read and execute instructions in the memory, to implement the method according to the first aspect or any possible implementation of the first aspect.

According to a sixth aspect, this application provides a communication apparatus, including at least one processor and a memory. The at least one processor is configured to: couple to the memory, and read and execute instructions in the memory, to implement the method according to the second aspect or any possible implementation of the second aspect.

According to a seventh aspect, this application provides a computer program product. The computer program product includes a computer program stored in a computer-readable storage medium, and the computer program is loaded by a processor to implement the method according to the first aspect, the second aspect, any possible implementation in the first aspect, or any possible implementation in the second aspect.

According to an eighth aspect, this application provides a computer-readable storage medium, configured to store a computer program. The computer program is loaded by a processor to perform the method according to the first aspect, the second aspect, any possible implementation in the first aspect, or any possible implementation in the second aspect.

According to a ninth aspect, this application provides a communication system. The system includes the apparatus according to the third aspect and the apparatus according to the fourth aspect, or the system includes the apparatus according to the fifth aspect and the apparatus according to the sixth aspect.

### BRIEF DESCRIPTION OF DRAWINGS

FIG. 1 is a diagram of a network architecture according to an embodiment of this application;
FIG. 2 is a diagram of another network architecture according to an embodiment of this application;
FIG. 3 is a flowchart of an initialization method according to an embodiment of this application;
FIG. 4 is a diagram of association between a virtual memory page and a physical memory page according to an embodiment of this application;
FIG. 5 is a flowchart of a communication method according to an embodiment of this application;
FIG. 6 is a flowchart of another communication method according to an embodiment of this application;
FIG. 7 is a flowchart of another communication method according to an embodiment of this application;
FIG. 8 is a flowchart of another communication method according to an embodiment of this application;
FIG. 9 is a flowchart of another communication method according to an embodiment of this application;
FIG. 10 is a diagram of association between a virtual memory page and a physical memory page according to an embodiment of this application;
FIG. 11 is a flowchart of another communication method according to an embodiment of this application;
FIG. 12 is a diagram of a structure of a communication apparatus according to an embodiment of this application;
FIG. 13 is a diagram of a structure of another communication apparatus according to an embodiment of this application;
FIG. 14 is a diagram of a structure of a device according to an embodiment of this application; and
FIG. 15 is a diagram of a structure of another device according to an embodiment of this application.

### DESCRIPTION OF EMBODIMENTS

The following further describes in detail embodiments of this application with reference to accompanying drawings.

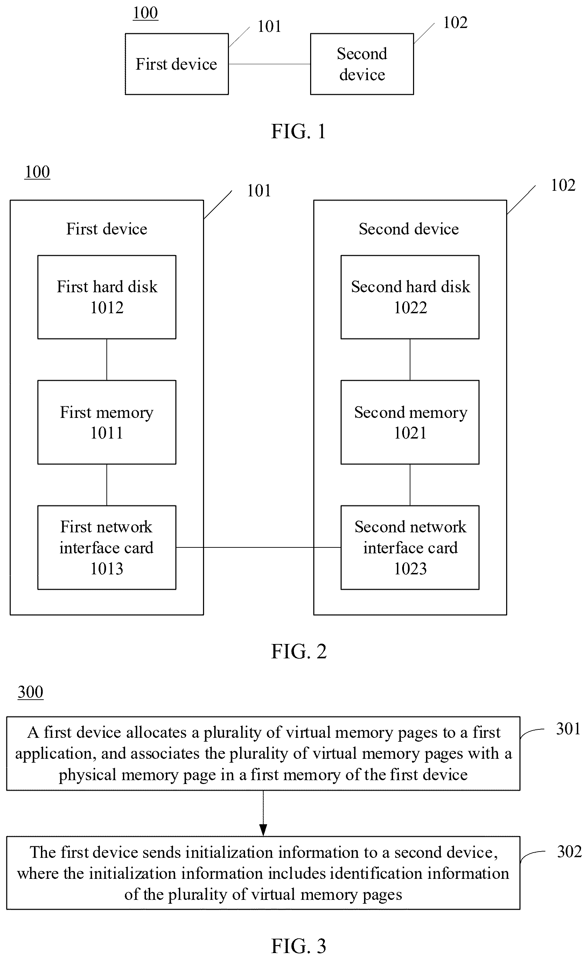

With reference to FIG. 1, an embodiment of this application provides a network architecture 100. The network architecture 100 includes a first device 101 and a second device 102. The first device 101 and the second device 102 may communicate with each other by using an RDMA technology.

For example, the second device 102 may access a memory of the first device 101 by using an RDMA technology, or the first device 101 may access a memory of the second device 102 by using an RDMA technology.

With reference to FIG. 2, a first device 101 includes a first memory 1011, a first hard disk 1012, and a first network interface card 1013, and a second device 102 includes a second memory 1021, a second hard disk 1022, and a second network interface card 1023.

The first device 101 may run a first application. When the first device 101 starts the first application, the first device 101 may allocate a plurality of virtual memory pages to the first application. Each of the plurality of virtual memory pages is associated with a physical memory page in the first memory 1011, or a part of virtual memory pages in the plurality of virtual memory pages is associated with a physical memory page in the first memory 1011. For any virtual memory page, a physical memory page associated with the virtual memory page is used to store data corresponding to the virtual memory page.

In this way, when the first device 101 runs the first application, the first application may access any one of the plurality of virtual memory pages. Optionally, the first application accessing the virtual memory page means that the first application accesses a physical memory page associated with the virtual memory page. For example, the first application may write data into the physical memory page associated with the virtual memory page, and/or may read data from the physical memory page associated with the virtual memory page.

The first device 101 associating the virtual memory page with the physical memory page means that the first device 101 correspondingly stores identification information of the virtual memory page and identification information of the physical memory page in a correspondence between the identification information of the virtual memory page and the identification information of the physical memory page.

For a virtual memory page that is not associated with a physical memory page, a page fault occurs on the virtual memory page. The page fault means that the first memory 1011 has no physical memory page for storing data corresponding to the virtual memory page. The physical memory page may also be referred to as a physical memory page corresponding to the data.

The first memory 1011 includes a shared physical memory page. The shared physical memory page may be allocated when the first device 101 is started. For at least one virtual memory page (a virtual memory page with a page fault) that is not associated with a physical memory page and that is in the plurality of virtual memory pages, the first device 101 associates the at least one virtual memory page with the shared physical memory page. Optionally, the first device 101 correspondingly stores identification information of the at least one virtual memory page and identification information of the shared physical memory page in a correspondence between the identification information of the virtual memory page and the identification information of the physical memory page.

Data stored in the shared physical memory page may not be data corresponding to the at least one virtual memory page. The shared physical memory page is not a physical memory page corresponding to the data.

In some embodiments, the first device 101 uses one or more physical memory pages in the first memory 1011 to store the correspondence between the identification information of the virtual memory page and the identification information of the physical memory page.

In some embodiments, the first memory 1011 includes two shared physical memory pages that are a first shared physical memory page and a second shared physical memory page. For at least one virtual memory page that is not associated with a physical memory page and that is in the plurality of virtual memory pages, the first device 101 associates the at least one virtual memory page with the first shared physical memory page, and associates the at least one virtual memory page with the second shared physical memory page.

In some embodiments, the first shared physical memory page stores first information. The first information is specified information. The first information indicates that a page fault occurs on each virtual memory page associated with the first shared physical memory page. The first shared physical memory page is read-only and not written, and the second shared physical memory page is write-only and not read. For example, the first application may read the first information stored on the first shared physical memory page, and/or the first application may write data into the second shared physical memory page.

The correspondence between the identification information of the virtual memory page and the identification information of the physical memory page includes a first correspondence and a second correspondence.

For any virtual memory page that is associated with a physical memory page and that is in the plurality of virtual memory pages, the first device 101 correspondingly stores, in the first correspondence, identification information of the virtual memory page and identification information of the physical memory page, and correspondingly stores, in the second correspondence, the identification information of the virtual memory page and the identification information of the physical memory page.

For any virtual memory page that is not associated with a physical memory page and that is in the plurality of virtual memory pages, the first device 101 correspondingly stores, in the first correspondence, identification information of the virtual memory page and identification information of the first shared physical memory page, and correspondingly stores, in the second correspondence, the identification information of the virtual memory page and identification information of the second shared physical memory page.

In this way, when the first application needs to read data that belongs to any virtual memory page, the first application obtains, based on the first correspondence, a physical memory page associated with the virtual memory page, and reads the data stored on the physical memory page. When the first application needs to write data that belongs to any virtual memory page, the first application obtains, based on the second correspondence, a physical memory page associated with the virtual memory page, and writes the data into the physical memory page.

In some embodiments, for any virtual memory page, the identification information of the virtual memory page includes an area identifier of a storage area to which the virtual memory page belongs and a virtual address of the virtual memory page in the storage area. The identification information of the physical memory page includes a physical address of the physical memory page.

In some embodiments, when the first device 101 starts the first application, the first device 101 may allocate at least one storage area to the first application. Each storage area includes at least one virtual memory page. The area identifier of the storage area may be a key (key) value of the storage area, or the like.

In some embodiments, for any virtual memory page, the first device 101 may perform a page replacement operation on the virtual memory page.

It is assumed that the virtual memory page is associated with a physical memory page in the first memory 1011, and the physical memory page is a physical memory page other than the shared physical memory pages (the first shared physical memory page and the second shared physical memory page) in the first memory 1011. The physical memory page is used to store data corresponding to the virtual memory page. In this case, a process in which the first device 101 performs a page replacement operation on the virtual memory page is that the first device 101 stores, in the first hard disk 1012, the data that corresponds to the virtual memory page and that is stored in the physical memory page, and releases the physical memory page.

After releasing the physical memory page, the first device 101 may further associate the virtual memory page with the shared physical memory pages (the first shared physical memory page and the second shared physical memory page) in the first memory 1011.

It is assumed that the virtual memory page is not associated with a physical memory page, and the physical memory page is a physical memory page other than the shared physical memory pages (the first shared physical memory page and the second shared physical memory page) in the first memory 1011. In this case, a process in which the first device 101 performs a page replacement operation on the virtual memory page is that the first device 101 obtains data corresponding to the virtual memory page from the first hard disk 1012, allocates a physical memory page from the first memory 1011, stores the data in the physical memory page, and associates the virtual memory page with the physical memory page.

When the virtual memory page is not associated with the physical memory page, a page fault occurs on the virtual memory page, and the page fault is generated because the first device 101 performs a page replacement operation on the virtual memory page.

After the first device 101 allocates the plurality of virtual memory pages to the first application, the first network interface card 1013 sends identification information of the plurality of virtual memory pages to the second device 102. After the second device 102 receives the identification information of the plurality of virtual memory pages, for any one of the plurality of virtual memory pages, the second network interface card 1023 in the second device 102 can access the virtual memory page in the first device 101 by using identification information of the virtual memory page.

In some embodiments, the first network interface card 1013 and the second network interface card 1023 may be RDMA network interface cards, field-programmable gate array (Field-Programmable Gate Array, FPGA) network interface cards, non-volatile memory (non-volatile memory, NVM) network interface cards, or the like.

Similarly, the second device 102 may run a second application. When the second device 102 starts the second application, the second device 102 may allocate a plurality of virtual memory pages to the second application. The second device 102 further associates a virtual memory page with a physical memory page in the second memory 1021.

The second network interface card 1023 sends the identification information of the plurality of virtual memory pages to the first device 101. After the first device 101 receives the identification information of the plurality of virtual memory pages, for any one of the plurality of virtual memory pages, the first network interface card 1013 in the first device 101 can also access the virtual memory page in the second device 102 by using identification information of the virtual memory page.

With reference to FIG. 3, an embodiment of this application provides an initialization method 300. The initialization method 300 is applied to the network architecture 100 shown in FIG. 1 or FIG. 2. When starting a first application, a first device allocates a memory to the first application by using the initialization method 300. With reference to FIG. 3, the initialization method 300 includes the following procedure of step 301 and step 302.

Step 301: The first device allocates a plurality of virtual memory pages to the first application, and associates the plurality of virtual memory pages with a physical memory page in a first memory of the first device.

In step 301, when starting the first application, the first device allocates the plurality of virtual memory pages to the first application. For a part of virtual memory pages in the plurality of virtual memory pages, a physical memory page is allocated from the first memory of the first device to each of the part of virtual memory pages. The allocated physical memory page is a physical memory page other than a first shared physical memory page and a second shared physical memory page in the first memory. For any one of the part of virtual memory pages, identification information of the virtual memory page and identification information of a physical memory page of the virtual memory page are correspondingly stored in a first correspondence and a second correspondence.

For any virtual memory page other than the part of virtual memory pages in the plurality of virtual memory pages, the first device correspondingly stores, in the first correspondence, identification information of the virtual memory page and identification information of the first shared physical memory page, and correspondingly stores, in the second correspondence, the identification information of the virtual memory page and identification information of the second shared physical memory page.

The first shared physical memory page and the second shared physical memory page are allocated when the first device is started. When being started, the first device selects two physical memory pages from the first memory as the first shared physical memory page and the second shared physical memory page. The first shared physical memory page is read-only and not written, and the second shared physical memory page is write-only and not read.

The first shared physical memory page is used to store first information. The first information is specified information. The first information indicates that a page fault occurs on each virtual memory page associated with the first shared physical memory page.

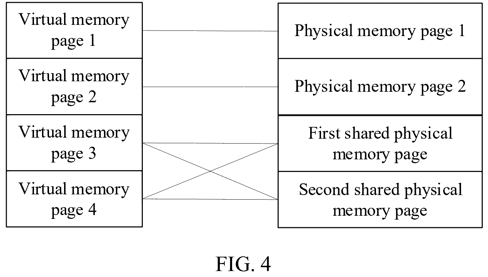

For example, with reference to FIG. 4, when starting the first application, the first device allocates four virtual memory pages to the first application. The four virtual memory pages are virtual memory pages 1, 2, 3, and 4. For the virtual memory page 1 and the virtual memory page 2, from the first memory, the first device allocates a physical memory page 1 to the virtual memory page 1 and allocates a physical memory page 2 to the virtual memory page 2.

The first device correspondingly stores identification information "VD1" of the virtual memory page 1 and identification information "PD1" of the physical memory page 1 in the first correspondence shown in Table 1 and the second correspondence shown in Table 2. The first device correspondingly stores identification information "VD2" of the virtual memory page 2 and identification information "PD2" of the physical memory page 2 in the first correspondence shown in Table 1 and the second correspondence shown in Table 2.

For the virtual memory page 3, the first device correspondingly stores identification information "VD3" of the virtual memory page 3 and identification information "PD3" of the first shared physical memory page in the first correspondence shown in Table 1, and correspondingly stores the identification information "VD3" of the virtual memory page 3 and identification information "PD4" of the second shared physical memory page in the second correspondence shown in Table 2.

For the virtual memory page 4, the first device correspondingly stores identification information "VD4" of the virtual memory page 4 and the identification information "PD3" of the first shared physical memory page in the first correspondence shown in Table 1, and correspondingly stores the identification information "VD4" of the virtual memory page 4 and identification information "PD4" of the second shared physical memory page in the second correspondence shown in Table 2.

**Table 1**

| Identification information of a virtual memory page | Identification information of a physical memory page |
|---|---|
| Identification information "VD1" of the virtual memory page 1 | Identification information "PD1" of the physical memory page 1 |
| Identification information "VD2" of the virtual memory page 2 | Identification information "PD2" of the physical memory page 2 |
| Identification information "VD3" of the virtual memory page 3 | Identification information "PD3" of the first shared physical memory page |
| Identification information "VD4" of the virtual memory page 4 | Identification information "PD3" of the first shared physical memory page |
| ... | ... |

**Table 2**

| Identification information of a virtual memory page | Identification information of a physical memory page |
|---|---|
| Identification information "VD1" of the virtual memory page 1 | Identification information "PD1" of the physical memory page 1 |
| Identification information "VD2" of the virtual memory page 2 | Identification information "PD2" of the physical memory page 2 |
| Identification information "VD3" of the virtual memory page 3 | Identification information "PD4" of the second shared physical memory page |
| Identification information "VD4" of the virtual memory page 4 | Identification information "PD4" of the second shared physical memory page |
| ... | ... |

Step 302: The first device sends initialization information to a second device. The initialization information includes identification information of the plurality of virtual memory pages.

In step 302, the first device sends the initialization information to the second device by using a first network interface card of the first device.

In some embodiments, the first device further disables a memory locking function of the first network interface card. The memory locking function is a function of the first network interface card. In a process in which the first network interface card accesses a specific virtual memory page, a physical memory page associated with each virtual memory page of the first application is locked by using the memory locking function. In this way, in a process in which the first network interface card accesses the virtual memory page, the first device does not release the physical memory page associated with each virtual memory page of the first application, and does not write data into the physical memory page associated with each virtual memory page of the first application.

After the first device disables the memory locking function of the first network interface card, in a process in which the first network interface card accesses the virtual memory page, the first network interface card does not lock the physical memory page associated with each virtual memory page of the first application.

Similarly, when starting a second application, the second device may allocate a memory to the second application by using the foregoing initialization method 300. Details are not described herein again.

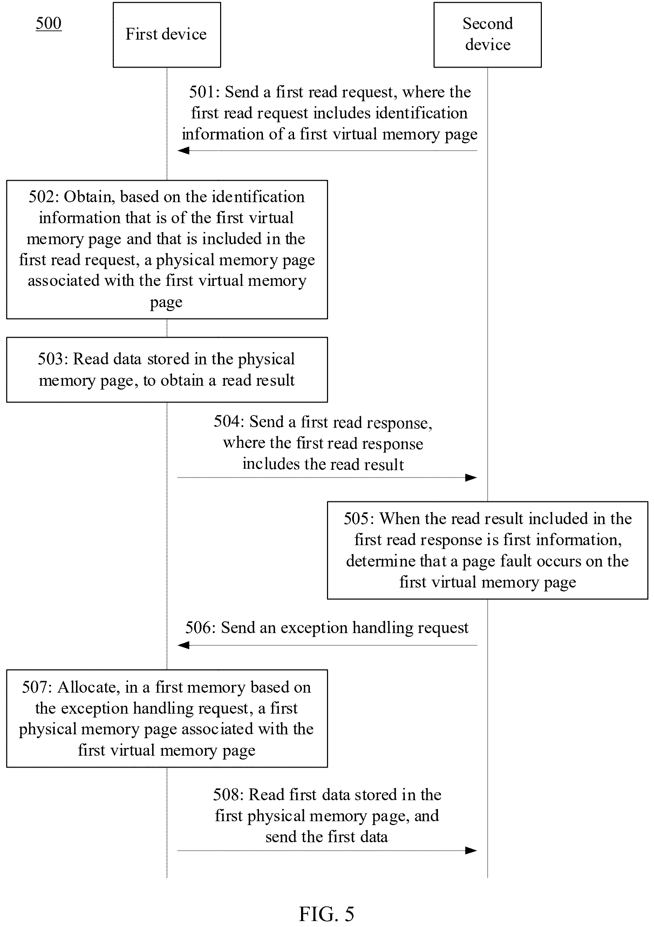

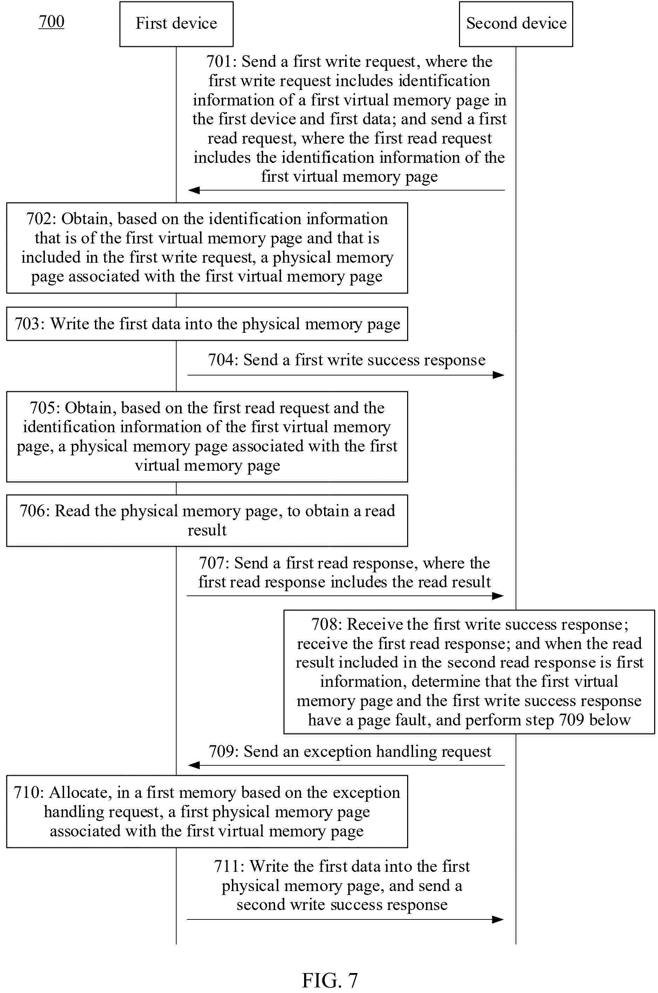

After the second device receives the initialization information, the second device obtains the identification information of the plurality of virtual memory pages of the first application. In this way, the second device can access any virtual memory page of the first application. For a detailed implementation process, refer to the following communication method 500 shown in FIG. 5, or refer to the following communication method 700 shown in FIG. 7. Details are not described herein.

In this embodiment of this application, when the associated physical memory page is initialized for the plurality of virtual memory pages of the first application, for a virtual memory page with a page fault, the virtual memory page is associated with the first shared physical memory page, and the first shared physical memory page is used to store the first information. In this way, when another device accesses a virtual memory page with a page fault in the first device, the first network interface card of the first device may read the first information on the first shared physical memory page associated with the virtual memory page, and send the first information to the another device, so that the another device detects in time that the page fault occurs on the virtual memory page.

With reference to FIG. 5, an embodiment of this application provides a communication method 500. The communication method 500 is applied to the network architecture 100 shown in FIG. 1 or FIG. 2. A second device reads data in a virtual memory page of a first device by using the communication method 500. The communication method 500 includes the following procedure of step 501 to step 508.

Step 501: The second device sends a first read request to the first device. The first read request includes identification information of a first virtual memory page in the first device.

The first virtual memory page is a virtual memory page corresponding to first data to be read by the second device. The first virtual memory page is a virtual memory page in the first device.

A first memory of the first device includes a physical memory page corresponding to the first data. The first virtual memory page is associated with the physical memory page. In other words, the first data is stored in the physical memory page. Alternatively,

A first memory of the first device does not include a physical memory page corresponding to the first data. The first virtual memory page is not associated with the physical memory page. The first data is stored in a first hard disk of the first device. In this case, a page fault occurs on the first virtual memory page.

The second device obtains identification information of a plurality of virtual memory pages of a first application by using the initialization method shown in FIG. 3. The first application is an application running on the first device.

In step 501, the second device runs a second application. In a process in which the second device runs the second application, the second application may need to read data corresponding to a virtual memory page of the first application. For ease of description, the virtual memory page is referred to as the first virtual memory page, and the data is referred to as the first data. After the first data is read, the second application needs to store the first data to a second virtual memory page. The second virtual memory page is a virtual memory page of the second application on the second device.

In this case, a second network interface card of the second device sends the first read request to the first device. The first read request includes the identification information of the first virtual memory page.

In some embodiments, there is a network connection between a first network interface card of the first device and the second network interface card of the second device. The second network interface card of the second device sends the first read request to the first device by using the network connection.

Step 502: The first device receives the first read request, and obtains, based on the identification information that is of the first virtual memory page and that is included in the first read request, a physical memory page associated with the first virtual memory page.

In Step 502, the first network interface card of the first device receives the first read request, and obtains, based on the identification information that is of the first virtual memory page and that is included in the first read request, the physical memory page associated with the first virtual memory page.

In some embodiments, the first network interface card of the first device receives the first read request, obtains, from a first correspondence based on the identification information that is of the first virtual memory page and that is included in the first read request, identification information of the physical memory page associated with the first virtual memory page, and determines the physical memory page in the first memory based on the identification information of the physical memory page. The physical memory page may be a first shared physical memory page; or the physical memory page may be a physical memory page other than a first shared physical memory page and a second shared physical memory page in the first memory, where the physical memory page stores the first data.

If the physical memory page is the first shared physical memory page, it indicates that the first memory includes no physical memory page that is associated with the first virtual memory page and that corresponds to the first data. In this case, the page fault occurs on the first virtual memory page. In addition, identification information of the second shared physical memory page associated with the first virtual memory page is stored in a second correspondence.

When the page fault occurs on the first virtual memory page, because the first virtual memory page is associated with the first shared physical memory page, after receiving the first read request, the first network interface card obtains, based on the identification information that is of the first virtual memory page and that is included in the first read request, the first shared physical memory page associated with the first virtual memory page. In this way, the first network interface card cannot sense that the page fault occurs on the first virtual memory page, and the first network interface card does not set a status of a network connection to the second device to error. In this way, the second device may continue to send a read request or a write request to the first device by using the network connection, the first network interface card of the first device may continue to receive the read request or the write request, and the second device accesses the first memory, thereby avoiding suspension of communication between the first device and the second device.

Step 503: The first device reads data stored in the physical memory page, to obtain a read result.

In some embodiments, the physical memory page is the first shared physical memory page. The first network interface card of the first device reads the first information from the first shared physical memory page. The read result is the first information. The first information indicates that the page fault occurs on the first virtual memory page. Alternatively,

In some embodiments, the physical memory page is a physical memory page other than the first shared physical memory page and the second shared physical memory page in the first memory, and the physical memory page stores the first data. The first network interface card of the first device reads the first data from the physical memory page. The read result is the first data.

Step 504: The first device sends a first read response to the second device. The first read response includes the read result.

In step 504, the first network interface card of the first device sends the first read response to the second device by using the network connection.

Step 505: The second device receives the first read response; and when the read result included in the first read response is the first information, determines that the page fault occurs on the first virtual memory page, and performs step 506 below.

In step 505, the second network interface card of the second device receives the first read response; and when the read result included in the first read response is the first information, determines that the page fault occurs on the first virtual memory page, and performs step 506 below. When the read result included in the first read response is the first data, the first data is stored in a physical memory page that is associated with the second virtual memory page and that is in a second memory. The second virtual memory page is a virtual memory page of the second application.

In step 505, because the read result is the first information, the second network interface card of the second device blocks submission of a work completion event to the second application, to avoid a running error of the second application.

Step 506: The second device sends an exception handling request to the first device.

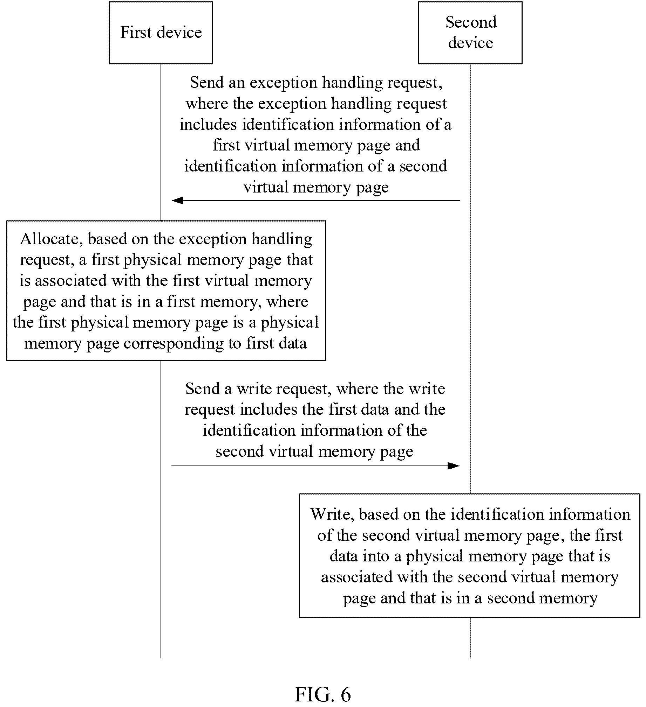

In some embodiments, with reference to FIG. 6, the exception handling request includes the identification information of the first virtual memory page and identification information of the second virtual memory page.

In step 506, the second network interface card of the second device sends the exception handling request to the first device by using the network connection.

Step 507: The first device receives the exception handling request, and allocates, in the first memory based on the exception handling request, a first physical memory page associated with the first virtual memory page. The first physical memory page is a physical memory page corresponding to the first data.

The first device receives the exception handling request, selects a physical memory page from the first memory as the first physical memory page based on the exception handling request, reads, from the first hard disk based on the identification information of the first virtual memory page, the first data corresponding to the first virtual memory page, and stores the first data in the first physical memory page. Identification information of the first shared physical memory page associated with the first virtual memory page is updated to identification information of the first physical memory page in the first correspondence based on the identification information of the first virtual memory page. Identification information of the second shared physical memory page associated with the first virtual memory page is updated to the identification information of the first physical memory page in the second correspondence based on the identification information of the first virtual memory page. In this way, the first physical memory page associated with the first virtual memory page is allocated in the first memory.

Step 508: The first device reads the first data stored in the first physical memory page, and sends the first data to the second device.

In step 508, the first network interface card of the first device reads the first data stored in the first physical memory page, and sends the first data to the second device.

The second network interface card of the second device receives the first data, stores the first data in a physical memory page that is associated with the second virtual memory page and that is in the second memory, and submits a work completion event to the second application, so that the second application reads the first data from the physical memory page associated with the second virtual memory page and runs based on the first data.

In some embodiments, with reference to FIG. 6, the first network interface card of the first device sends a write request to the second device. The write request includes the first data and the identification information of the second virtual memory page. The second network interface card of the second device receives the write request, and writes, based on the identification information of the second virtual memory page, the first data into the physical memory page that is associated with the second virtual memory page and that is in the second memory.

In this embodiment of this application, when the physical memory page associated with the first virtual memory page is the first shared physical memory page and the second shared physical memory page, the page fault occurs on the first virtual memory page, the first shared physical memory page includes the first information, and the first information indicates that the page fault occurs on the first virtual memory page. The first device receives the first read request; obtains, based on the identification information of the first virtual memory page and the first correspondence, the first shared physical memory page associated with the first virtual memory page; reads the first information in the first shared physical memory page; and sends the first information to the second device. The first read request includes the identification information of the first virtual memory page. In this way, after receiving the first information, the second device can determine, in time based on the first information, that the page fault occurs on the first virtual memory page, and send the exception handling request to the first device. The first device allocates, based on the exception handling request, the first physical memory page associated with the first virtual memory page, reads the first data stored in the first physical memory page, and sends the first data to the second device. In this way, the following is avoided: Only after waiting for a long time, the second device finds that the page fault occurs on the first virtual memory page, thereby improving efficiency of reading the first data.

With reference to FIG. 7, an embodiment of this application provides a communication method 700. The communication method 700 is applied to the network architecture 100 shown in FIG. 1 or FIG. 2. A second device writes data into a virtual memory page of a first device by using the communication method 700. The communication method 700 includes the following procedure of step 701 to step 711.

Step 701: The second device sends a first write request to the first device, where the first write request includes identification information of a first virtual memory page in the first device and first data; and sends a first read request to the first device, where the first read request includes the identification information of the first virtual memory page.

The first virtual memory page is a virtual memory page corresponding to the first data to be written by the second device. The first data is data corresponding to a second virtual memory page of the second device.

A first memory of the first device may include a physical memory page corresponding to the first data. The physical memory page is a physical memory page into which the first data needs to be written. The first virtual memory page is associated with the physical memory page. Alternatively,

A first memory of the first device does not include a physical memory page corresponding to the first data. The first virtual memory page is not associated with the physical memory page. A page fault occurs on the first virtual memory page.

The second device includes identification information of a plurality of virtual memory pages of a first application. The first application is an application running on the first device.

In step 701, the second device runs a second application. In a process in which the second device runs the second application, the second application may need to write the first data corresponding to the second virtual memory page into the first virtual memory page of the first application. The second virtual memory page is a virtual memory page of the second application. A physical memory page that is associated with the second virtual memory page and that is in a second memory stores the first data.

In this case, a second network interface card of the second device first sends the first write request to the first device. The first write request includes the identification information of the first virtual memory page and the first data. Then, the second network interface card sends the first read request to the first device. The first read request includes the identification information of the first virtual memory page.

In some embodiments, there is a network connection between a first network interface card of the first device and the second network interface card of the second device. The second network interface card of the second device sends the first write request and the first read request to the first device by using the network connection.

Step 702: The first device receives the first write request, and obtains, based on the identification information that is of the first virtual memory page and that is included in the first write request, a physical memory page associated with the first virtual memory page.

In Step 702, the first network interface card of the first device receives the first write request, and obtains, based on the identification information that is of the first virtual memory page and that is included in the first write request, the physical memory page associated with the first virtual memory page.

In some embodiments, the first network interface card of the first device receives the first write request, obtains, from a second correspondence based on the identification information that is of the first virtual memory page and that is included in the first write request, identification information of the physical memory page associated with the first virtual memory page, and determines the physical memory page in the first memory based on the identification information of the physical memory page. The physical memory page may be a second shared physical memory page; or the physical memory page may be a physical memory page other than a first shared physical memory page and a second shared physical memory page in the first memory, where the physical memory page is a physical memory page corresponding to the first data.

If the physical memory page is the second shared physical memory page, it indicates that the first virtual memory page is not associated with the physical memory page corresponding to the first data. In this case, the page fault occurs on the first virtual memory page.

When the page fault occurs on the first virtual memory page, because the first virtual memory page is associated with the second shared physical memory page, after receiving the first write request, the first network interface card obtains, based on the identification information that is of the first virtual memory page and that is included in the first write request, the second shared physical memory page associated with the first virtual memory page. In this way, the first network interface card cannot sense that the page fault occurs on the first virtual memory page, and the first network interface card does not set a status of a network connection to the second device to error. In this way, the second device may continue to send a read request or a write request to the first device by using the network connection, the first network interface card of the first device may continue to receive the read request or the write request, and the second device accesses the first memory, thereby avoiding suspension of communication between the first device and the second device.

Step 703: The first device writes the first data into the physical memory page.

In some embodiments, the physical memory page is the second shared physical memory page, and the first network interface card of the first device writes the first data into the second shared physical memory page. Alternatively,

In some embodiments, the physical memory page is a physical memory page other than the first shared physical memory page and the second shared physical memory page in the first memory, and the first network interface card of the first device writes the first data into the physical memory page.

Step 704: The first device sends a first write success response to the second device.

In step 704, the first network interface card of the first device sends the first write success response to the second device.

Step 705: The first device receives the first read request, and obtains, based on the identification information that is of the first virtual memory page and that is included in the first read request, a physical memory page associated with the first virtual memory page.

In Step 705, the first network interface card of the first device receives the first read request, and obtains, based on the identification information that is of the first virtual memory page and that is included in the first read request, the physical memory page associated with the first virtual memory page.

In some embodiments, the first network interface card of the first device receives the first read request, obtains, from a first correspondence based on the identification information that is of the first virtual memory page and that is included in the first read request, identification information of the physical memory page associated with the first virtual memory page, and determines the physical memory page in the first memory based on the identification information of the physical memory page. The physical memory page may be the first shared physical memory page; or the physical memory page may be the physical memory page other than the first shared physical memory page and the second shared physical memory page in the first memory, where the physical memory page stores the first data.

If the physical memory page is the first shared physical memory page, it indicates that the first virtual memory page is not associated with the physical memory page corresponding to the first data. In this case, the page fault occurs on the first virtual memory page.

Step 706: The first device reads the physical memory page, to obtain a read result.

In some embodiments, the physical memory page is the first shared physical memory page. The first network interface card of the first device reads the first information from the first shared physical memory page. The read result is the first information. Alternatively,

In some embodiments, the physical memory page is the physical memory page other than the first shared physical memory page and the second shared physical memory page in the first memory, and the physical memory page stores the first data. The first network interface card of the first device reads the first data from the physical memory page. The read result is the first data.

Step 707: The first device sends a first read response to the second device. The first read response includes the read result.

In step 707, the first network interface card of the first device sends the first read response to the second device by using the network connection.

Step 708: The second device receives the first write success response; receives the first read response; and when the read result included in the first read response is the first information, determines that the first virtual memory page and the first write success response have the page fault, and performs step 709 below.

In step 708, although the second device receives the first write success response, the second device cannot determine whether the first data is successfully written into the physical memory page that corresponds to the first data and that is in the first memory. Therefore, the second network interface card of the second device blocks submission of a work completion event to the second application, to avoid a running error of the second application.

The second network interface card of the second device receives the first read response; and when the read result included in the first read response is the first information, determines that the page fault occurs on the first virtual memory page and the first write success response is unexpected, and performs step 709 below.

When the read result included in the first read response is the first data, the second network interface card determines that no page fault occurs on the first virtual memory page, determines that the first data is successfully written into the physical memory page that corresponds to the first data and that is in the first memory, and submits the work completion event to the second application.

Step 709: The second device sends an exception handling request to the first device.

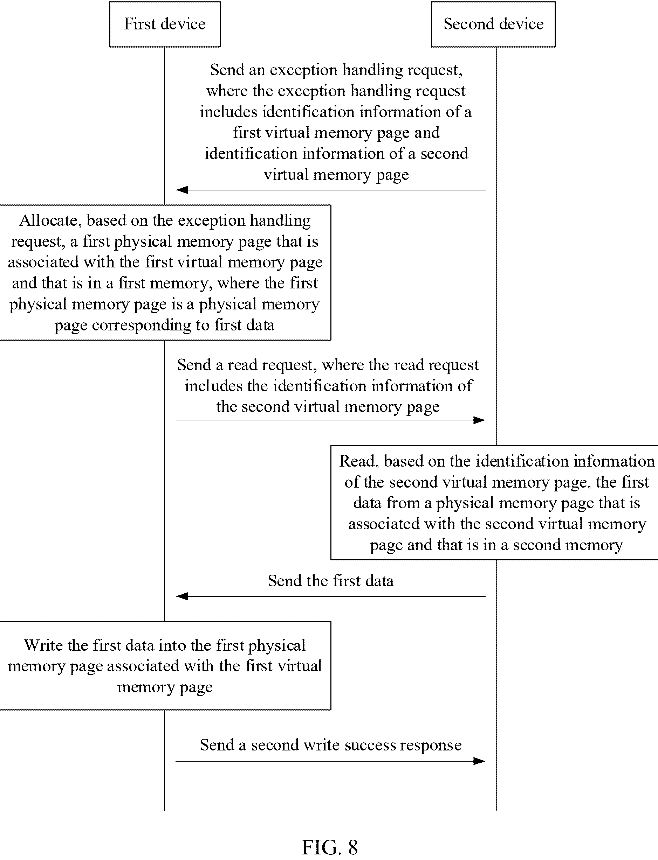

In some embodiments, with reference to FIG. 8, the exception handling request includes the identification information of the first virtual memory page and identification information of the second virtual memory page.

In step 709, the second network interface card of the second device sends the exception handling request to the first device by using the network connection.

Step 710: The first device receives the exception handling request, and allocates, in the first memory based on the exception handling request, the first physical memory page associated with the first virtual memory page.

The first device receives the exception handling request, and selects a physical memory page from the first memory as the first physical memory page based on the exception handling request. Identification information of the first shared physical memory page associated with the first virtual memory page is updated to identification information of the first physical memory page in the first correspondence based on the identification information of the first virtual memory page. Identification information of the second shared physical memory page associated with the first virtual memory page is updated to the identification information of the first physical memory page in the second correspondence based on the identification information of the first virtual memory page. In this way, the first physical memory page associated with the first virtual memory page is allocated in the first memory.

Step 711: The first device writes the first data into the first physical memory page, and sends a second write success response to the second device.

In step 711, the first network interface card of the first device sends the second write success response to the second device, and the second network interface card of the second device receives the second write success response, and submits the work completion event to the second application, so that the second application runs based on the work completion event.

In some embodiments, with reference to FIG. 8, in step 711, the first network interface card of the first device sends a second read request to the second device. The second read request includes the identification information of the second virtual memory page. The second network interface card of the second device receives the second read request, reads, based on the identification information of the second virtual memory page, the first data from the physical memory page that is associated with the second virtual memory page and that is in the second memory, and sends the first data to the first device. The first network interface card of the first device receives the first data, writes the first data into the first physical memory page associated with the first virtual memory page, and sends the second write success response to the second device.

In this embodiment of this application, when the physical memory page associated with the first virtual memory page is the first shared physical memory page and the second shared physical memory page, the page fault occurs on the first virtual memory page, the first shared physical memory page includes the first information, and the first information indicates that the page fault occurs on the first virtual memory page. The first device receives the first write request; obtains, based on the identification information of the first virtual memory page and the second correspondence, the second shared physical memory page associated with the first virtual memory page; writes the first data into the second shared physical memory page; and sends the first write success response to the second device. The first write request includes the identification information of the first virtual memory page. After receiving the first write success response, the second device sends the second read request to the first device. When being triggered by the second read request, the first device obtains, based on the identification information of the first virtual memory page and the first correspondence, the first shared physical memory page associated with the first virtual memory page; reads the first information in the first shared physical memory page; and sends the first information to the second device. In this way, after receiving the first information, the second device can determine, in time based on the first information, that the page fault occurs on the first virtual memory page, and send the exception handling request to the first device. The first device allocates, based on the exception handling request, the first physical memory page associated with the first virtual memory page, stores the first data in the first physical memory page, and sends the second write success response to the second device. In this way, the following is avoided: Only after waiting for a long time, the second device finds that the page fault occurs on the first virtual memory page, thereby improving efficiency of writing the first data.

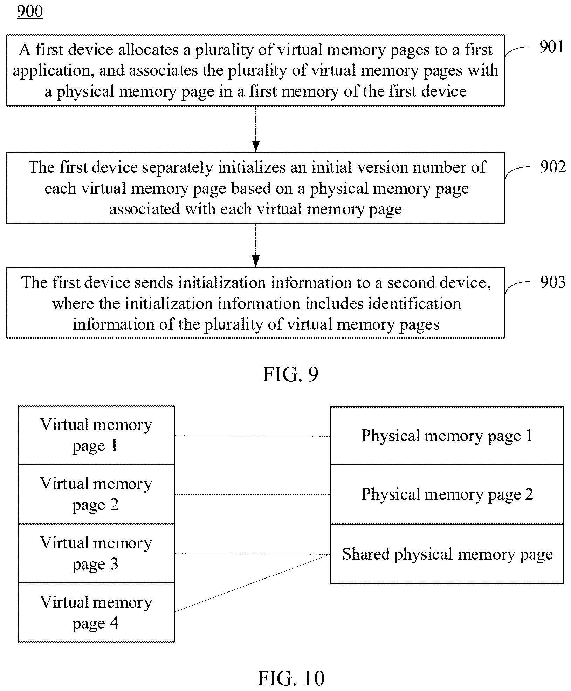

With reference to FIG. 9, an embodiment of this application provides an initialization method 900. The initialization method 900 is applied to the network architecture 100 shown in FIG. 1 or FIG. 2. When starting a first application, a first device allocates a memory to the first application by using the initialization method 900. With reference to FIG. 9, the initialization method 900 includes the following procedure of step 901 to step 903.

Step 901: The first device allocates a plurality of virtual memory pages to the first application, and associates the plurality of virtual memory pages with a physical memory page in a first memory of the first device.

In step 901, when starting the first application, the first device allocates the plurality of virtual memory pages to the first application. For a part of virtual memory pages in the plurality of virtual memory pages, the first device allocates, from the first memory of the first device, a physical memory page to each of the part of virtual memory pages. For any one of the part of virtual memory pages, a correspondence between identification information of the virtual memory page and identification information of the physical memory page of the virtual memory page is stored in a first correspondence.

For any virtual memory page other than the part of the plurality of virtual memory pages, the first device stores, in the first correspondence, a correspondence between identification information of the virtual memory page and identification information of a shared physical memory page.

The shared physical memory page is allocated when the first device is started. When being started, the first device selects a physical memory page from the first memory as the shared physical memory page.

For example, with reference to FIG. 10, when starting the first application, the first device allocates four virtual memory pages to the first application. The four virtual memory pages are virtual memory pages 1, 2, 3, and 4. For the virtual memory page 1 and the virtual memory page 2, from the first memory, the first device allocates a physical memory page 1 to the virtual memory page 1 and allocates a physical memory page 2 to the virtual memory page 2.

The first device correspondingly stores identification information "VD1" of the virtual memory page 1 and identification information "PD1" of the physical memory page 1 in the first correspondence shown in Table 1. The first device correspondingly stores identification information "VD2" of the virtual memory page 2 and identification information "PD2" of the physical memory page 2 in the first correspondence shown in Table 1.

For the virtual memory page 3, the first device correspondingly stores identification information "VD3" of the virtual memory page 3 and identification information "PD3" of a shared physical memory page in the first correspondence shown in Table 1. For the virtual memory page 4, the first device correspondingly stores identification information "VD4" of the virtual memory page 4 and the identification information "PD3" of the shared physical memory page in the first correspondence shown in Table 1.

In this way, the virtual memory page 1 is associated with the physical memory page 1, the virtual memory page 2 is associated with the physical memory page 2, the virtual memory page 3 is associated with the shared physical memory page, and the virtual memory page 4 is associated with the shared physical memory page.

Step 902: The first device separately initializes an initial version number of each virtual memory page based on the physical memory page associated with each virtual memory page.

In step 902, for any virtual memory page, after initializing the initial version number of the virtual memory page, the first device may store a correspondence between identification information of the virtual memory page and the initial version number in a third correspondence.

A version number of the virtual memory page indicates the physical memory page associated with the virtual memory page. There may be the following two cases of indicating the physical memory page.

In a first case, if the physical memory page associated with the virtual memory page is a shared physical memory page, the initial version number of the virtual memory page is an odd number; and if the physical memory page associated with the virtual memory page is not a shared physical memory page, the initial version number of the virtual memory page is an even number. Alternatively,

In a second case, if the physical memory page associated with the virtual memory page is a shared physical memory page, the initial version number of the virtual memory page is an even number; and if the physical memory page associated with the virtual memory page is not a shared physical memory page, the initial version number of the virtual memory page is an odd number.

When the first device performs a page replacement operation on the virtual memory page, the version number of the virtual memory page is increased, and an added value is an odd number. In other words, the first device adds an odd number such as 1, 3, or 5 to the version number of the virtual memory page. If the version number of the virtual memory page is an odd number, an increased version number of the virtual memory page is an even number. If the version number of the virtual memory page is an even number, the increased version number of the virtual memory page is an odd number.

In the first case, if the physical memory page associated with the virtual memory page is a shared physical memory page, and the version number of the virtual memory page is an odd number, a process in which the first device performs a page replacement operation on the virtual memory page is as follows: The first device allocates the physical memory page to the virtual memory page from the first memory, and updates, in the first correspondence, the identification information of the shared physical memory page associated with the virtual memory page to the identification information of the physical memory page. In this way, the shared physical memory page associated with the virtual memory page is replaced with the physical memory page. After completing the page replacement operation, the first device increases the version number of the virtual memory page, where the increased version number is an even number; and updates, to the increased version number, the version number that is of the virtual memory page and that is stored in the third correspondence.

If the physical memory page associated with the virtual memory page is a physical memory page other than a shared physical memory page in the first memory, and the version number of the virtual memory page is an even number, a process in which the first device performs a page replacement operation on the virtual memory page is as follows: The first device stores, in a first hard disk of the first device, data stored in the physical memory page, releases the physical memory page, and updates, in the first correspondence, the identification information of the physical memory page associated with the virtual memory page to the identification information of the shared physical memory page. In this way, the physical memory page associated with the virtual memory page is replaced with the shared physical memory page. After completing the page replacement operation, the first device increases the version number of the virtual memory page, where the increased version number is an odd number; and updates, to the increased version number, the version number that is of the virtual memory page and that is stored in the third correspondence.

For example, for the virtual memory page 1 and the virtual memory page 2, an initial version number of the virtual memory page 1 is initialized to 2 based on the physical memory page 1 associated with the virtual memory page 1, and an initial version number of the virtual memory page 2 is initialized to 2 based on the physical memory page 2 associated with the virtual memory page 2. A correspondence between the identification information "VD1" of the virtual memory page 1 and the initial version number 2 is stored in the third correspondence shown in Table 3, and a correspondence between the identification information "VD2" of the virtual memory page 2 and the initial version number 2 is stored in the third correspondence shown in Table 3.

For example, for the virtual memory page 3 and the virtual memory page 4, an initial version number of the virtual memory page 3 is initialized to 1 based on the shared physical memory page associated with the virtual memory page 1, and an initial version number of the virtual memory page 4 is initialized to 1 based on the shared physical memory page associated with the virtual memory page 4. A correspondence between the identification information "VD3" of the virtual memory page 3 and the initial version number 1 is stored in the third correspondence shown in Table 3, and a correspondence between the identification information "VD4" of the virtual memory page 4 and the initial version number 1 is stored in the third correspondence shown in Table 3.

**Table 3**

| Identification information of a virtual memory page | Version number |
|---|---|
| Identification information "VD1" of the virtual memory page 1 | 2 |
| Identification information "VD2" of the virtual memory page 2 | 2 |
| Identification information "VD3" of the virtual memory page 3 | 1 |
| Identification information "VD4" of the virtual memory page 4 | 1 |
| ... | ... |

When performing a page replacement operation on the virtual memory page 1, the first device stores, in the first memory, data stored in the physical memory page 1 associated with the virtual memory page 1, and releases the physical memory page 1. In the first correspondence shown in Table 1, the identification information "PD1" of the physical memory page 1 corresponding to the identification information "VD1" of the virtual memory page 1 is replaced with the identification information "PD3" of the shared physical memory, as shown in Table 4. The version number of the virtual memory page 1 is 2, and 1 is added to the version number of the virtual memory page 1 to obtain a version number 3 of the virtual memory 1. In the third correspondence shown in Table 3, the version number of the virtual memory page 1 is updated to the increased version number 3, as shown in Table 5.

When performing a page replacement operation on the virtual memory page 3, the first device allocates a physical memory page 5 from the first memory to the virtual memory page 3, obtains data corresponding to the virtual memory page 3 from the first hard disk, and stores the data in the physical memory page 5. In the first correspondence shown in Table 1, the identification information "PD3" of the shared physical memory page corresponding to the identification information "VD1" of the virtual memory page 1 is replaced with identification information "PD5" of the physical memory page 5, as shown in Table 4. The version number of the virtual memory page 3 is 1, and 1 is added to the version number of the virtual memory page 3 to obtain a version number 2 of the virtual memory page 3. In the third correspondence shown in Table 3, the version number of the virtual memory page 1 is updated to the increased version number 2, as shown in Table 5.

**Table 4**

| Identification information of a virtual memory page | Identification information of a physical memory page |
|---|---|
| Identification information "VD1" of the virtual memory page 1 | Identification information "PD3" of the shared physical memory page |
| Identification information "VD2" of the virtual memory page 2 | Identification information "PD2" of the physical memory page 2 |
| Identification information "VD3" of the virtual memory page 3 | Identification information "PD5" of the physical memory page 5 |
| Identification information "VD4" of the virtual memory page 4 | Identification information "PD3" of the shared physical memory page |
| ... | ... |

**Table 5**

| Identification information of a virtual memory page | Version number |
|---|---|
| Identification information "VD1" of the virtual memory page 1 | 3 |
| Identification information "VD2" of the virtual memory page 2 | 2 |
| Identification information "VD3" of the virtual memory page 3 | 2 |
| Identification information "VD4" of the virtual memory page 4 | 1 |
| ... | ... |

In the second case, if the physical memory page associated with the virtual memory page is a shared physical memory page, and the version number of the virtual memory page is an even number, a process in which the first device performs a page replacement operation on the virtual memory page is as follows: The first device allocates the physical memory page to the virtual memory page from the first memory, and updates, in the first correspondence, the identification information of the shared physical memory page associated with the virtual memory page to the identification information of the physical memory page. In this way, the shared physical memory page associated with the virtual memory page is replaced with the physical memory page. After completing the page replacement operation, the first device increases the version number of the virtual memory page, where the increased version number is an odd number; and updates, to the increased version number, the version number that is of the virtual memory page and that is stored in the third correspondence.

If the physical memory page associated with the virtual memory page is a physical memory page other than a shared physical memory page in the first memory, and the version number of the virtual memory page is an odd number, a process in which the first device performs a page replacement operation on the virtual memory page is as follows: The first device stores, in a first hard disk of the first device, data stored in the physical memory page, releases the physical memory page, and updates, in the first correspondence, the identification information of the physical memory page associated with the virtual memory page to the identification information of the shared physical memory page. In this way, the physical memory page associated with the virtual memory page is replaced with the shared physical memory page. After completing the page replacement operation, the first device increases the version number of the virtual memory page, where the increased version number is an even number; and updates, to the increased version number, the version number that is of the virtual memory page and that is stored in the third correspondence.

In some embodiments, the third correspondence is stored in a physical memory page in the first memory.

Step 903: The first device sends initialization information to a second device. The initialization information includes identification information of the plurality of virtual memory pages.

In step 903, the first device sends the initialization information to the second device by using a first network interface card of the first device.

In some embodiments, the first device further disables a memory locking function of the first network interface card.

In some embodiments, the first network interface card includes identification information of the physical memory page storing the third correspondence, or the initialization information further includes identification information of the physical memory page storing the third correspondence.

There is no execution sequence between step 902 and step 903. Step 902 may be performed before step 903, or step 903 may be performed before step 902, or step 902 and step 903 may be performed at the same time.

Similarly, when starting a second application, the second device may allocate a memory to the second application by using the foregoing initialization method 900. Details are not described herein again.

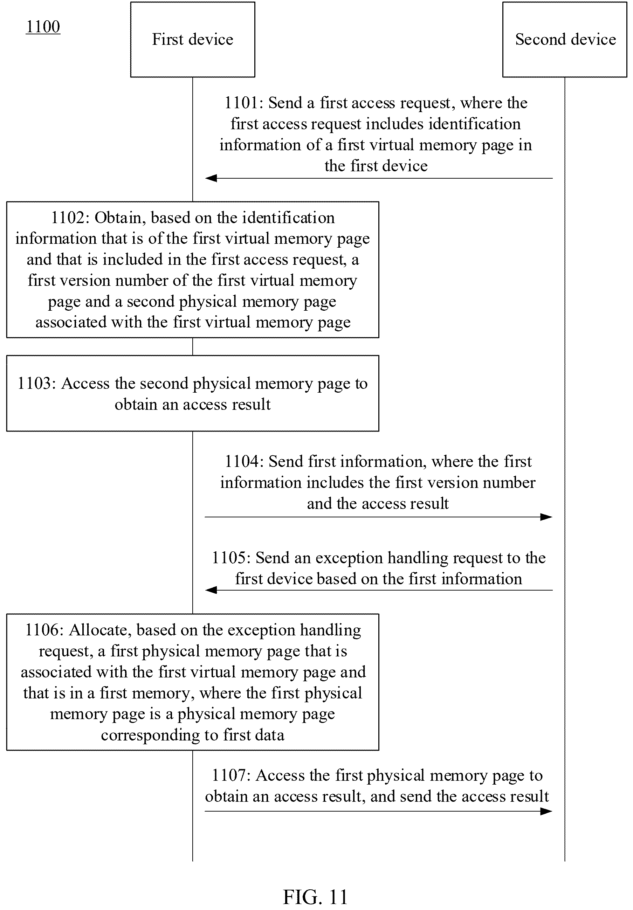

After the second device receives the initialization information, the second device obtains the identification information of the plurality of virtual memory pages of the first application. In this way, the second device can access any virtual memory page of the first application. For a detailed implementation process, refer to the following communication method 1100 shown in FIG. 11. Details are not described herein.

In this embodiment of this application, the first device initializes the associated physical memory page for the plurality of virtual memory pages of the first application, and initializes the version number of each virtual memory page based on the physical memory page associated with each virtual memory page. For a virtual memory page with a page fault, the version number of each virtual memory page indicates the physical memory page associated with each virtual memory page. In this way, when another device accesses a virtual memory page with a page fault in the first device, the first network interface card of the first device may read a version number of the virtual memory page, and send the version number to the another device, so that the another device determines, based on the version number, that the virtual memory page is associated with a shared physical memory page, and therefore finds that the page fault occurs on the virtual memory page.

With reference to FIG. 11, an embodiment of this application provides a communication method 1100. The communication method 1100 is applied to the network architecture 100 shown in FIG. 1 or FIG. 2. A second device accesses data in a virtual memory page of a first device by using the communication method 1100. The communication method 1100 includes the following procedure of step 1101 to step 1107.

Step 1101: The second device sends a first access request to the first device. The first access request includes identification information of a first virtual memory page in the first device.

The first virtual memory page is a virtual memory page in the first device.

The first virtual memory page is a virtual memory page corresponding to first data to be read by the second device. The first data is data stored in the first device. The first access request is a read request. Alternatively, the first virtual memory page is a virtual memory page corresponding to first data to be written by the second device. The first access request is a write request. The first access request further includes the first data.

The second device obtains identification information of a plurality of virtual memory pages of a first application by using the initialization method shown in FIG. 9. The first application is an application running on the first device.

In step 1101, the second device runs a second application. In a process in which the second device runs the second application, the second application may need to access data corresponding to a virtual memory page of the first application. For ease of description, the virtual memory page is referred to as the first virtual memory page, and the data is referred to as the first data. In this case, a second network interface card of the second device sends the first access request to the first device. The first access request includes the identification information of the first virtual memory page.

In some embodiments, there is a network connection between a first network interface card of the first device and the second network interface card of the second device. The second network interface card of the second device sends the first access request to the first device by using the network connection.

In some embodiments, the first access request further includes identification information of a physical memory page storing a third correspondence.

Step 1102: The first device receives the first access request, and obtains, based on the identification information that is of the first virtual memory page and that is included in the first access request, a first version number of the first virtual memory page and a second physical memory page associated with the first virtual memory page.

In step 1102, the first network interface card of the first device receives the first access request, and obtains, based on the identification information that is of the first virtual memory page and that is included in the first access request, the first version number of the first virtual memory page and the physical memory page associated with the first virtual memory page.

In some embodiments, the first network interface card of the first device obtains the identification information of the physical memory page storing the third correspondence, determines the physical memory page based on the identification information of the physical memory page, and obtains, based on the identification information of the first virtual memory page, the first version number of the first virtual memory page from the third correspondence stored in the physical memory page. The first network interface card obtains, from a first correspondence based on the identification information of the first virtual memory page, identification information of the second physical memory page associated with the first virtual memory page, and determines the second physical memory page in a first memory based on the identification information of the second physical memory page.

In some embodiments, the first network interface card obtains the locally stored identification information of the physical memory page, or obtains the identification information of the physical memory page from the first access request.

The second physical memory page indicated by the first version number is a shared physical memory page. Alternatively,

The second physical memory page indicated by the first version number is a physical memory page other than a shared physical memory page in the first memory, and the second physical memory page is a physical memory page corresponding to the first data. When the first access request is a read request, the second physical memory page stores the first data.

If the second physical memory page is a shared physical memory page, it indicates that the first memory includes no physical memory page corresponding to the first data, and the first virtual memory page is not associated with the physical memory page corresponding to the first data. In this case, a page fault occurs on the first virtual memory page.

When the page fault occurs on the first virtual memory page, because the first virtual memory page is associated with the shared physical memory page, after receiving the first access request, the first network interface card obtains, based on the identification information that is of the first virtual memory page and that is included in the first access request, the shared physical memory page associated with the first virtual memory page. In this way, the first network interface card cannot sense that the page fault occurs on the first virtual memory page, and the first network interface card does not set a status of a network connection to the second device to error. In this way, the second device may continue to send an access request to the first device by using the network connection, the first network interface card of the first device may continue to receive the access request, and the second device accesses the first memory, thereby avoiding suspension of communication between the first device and the second device and improving communication efficiency.

In some embodiments, when the second physical memory page indicated by the first version number is a shared physical memory page, the first network interface card of the first device determines, based on the first version number, that the page fault occurs on the first virtual memory page, sends first information to the second device, and performs the following step 1105. The first information includes the first version number.

In some embodiments, when the second physical memory page indicated by the first version number is a physical memory page other than the shared physical memory page in the first memory, the first network interface card of the first device determines, based on the first version number, that no page fault occurs on the first virtual memory page, and performs the following step 1103.

In some embodiments, if the first network interface card of the first device does not sense whether the page fault occurs on the first virtual memory page, the following step 1103 is performed after step 1102 is performed.

Step 1103: The first device accesses the second physical memory page to obtain an access result.

In step 1103, the first network interface card of the first device accesses the second physical memory page to obtain the access result.

In some embodiments, the second physical memory page is a shared physical memory page. When the first access request is a read request, the first network interface card of the first device reads data from the shared physical memory page, and the access result includes the data read from the shared physical memory page. When the first access request is a write request, the first network interface card of the first device writes the first data into the shared physical memory page, and the access result includes a write success response. Alternatively,

In some embodiments, the second physical memory page is a physical memory page other than a shared physical memory page in the first memory, that is, the second physical memory page is the physical memory page corresponding to the first data. When the first access request is a read request, the second physical memory page stores the first data, and the first network interface card of the first device reads the first data from the second physical memory page, and the access result includes the first data. When the first access request is a write request, the first network interface card of the first device writes the first data into the second physical memory page, and the access result includes a write success response.

In a process in which the first network interface card of the first device accesses the second physical memory page, the first device may perform a page replacement operation on the first virtual memory page. After completing the page replacement operation on the first virtual memory page, the first device further increases the first version number of the first virtual memory page to obtain a second version number of the first virtual memory page. In other words, the first device updates the first version number of the first virtual memory page to the second version number in the third correspondence.

In some embodiments, the second physical memory page is a shared physical memory page, and after the first device performs the page replacement operation on the first virtual memory page, a third physical memory page associated with the first virtual memory page is a physical memory page other than the shared physical memory page in the first memory.

If the first access request is a read request, the first network interface card of the first device may first read a part of data from the shared physical memory page, and then read a part of data from the third physical memory page. The access result is not complete data stored in one physical memory page, but a part of data stored in two different physical memory pages. The access result is unexpected.

If the first access request is a write request, the first network interface card of the first device may first write a part of the first data into the shared physical memory page, and then write a remaining part of the first data into the third physical memory page. The first data is not written into one physical memory page, but written into two different physical memory pages. The write success response included in the access result is unexpected.

In some embodiments, the second physical memory page is a physical memory page corresponding to the first data. In other words, the second physical memory page is a physical memory page other than the shared physical memory page in the first memory. After the first device performs the page replacement operation on the first virtual memory page, the third physical memory page associated with the first virtual memory page is a shared physical memory page.

If the first access request is a read request, the first network interface card of the first device may first read a part of data from the second physical memory page, and then read a part of data from the shared physical memory page. The access result is not complete data stored in one physical memory page, but a part of data stored in two different physical memory pages. The access result is unexpected.

If the first access request is a write request, the first network interface card of the first device may first write a part of the first data into the second physical memory page, and then write a remaining part of the first data into the shared physical memory page. The first data is not written into one physical memory page, but written into two different physical memory pages. The write success response included in the access result is unexpected.

In some embodiments, after accessing the second physical memory page, the first network interface card of the first device further obtains the second version number of the first virtual memory page. In other words, the first network interface card of the first device obtains the second version number of the first virtual memory page from the third correspondence based on the identification information of the first virtual memory page.

Step 1104: The first device sends the first information to the second device. The first information includes the first version number and the access result.

In some embodiments, the first information further includes the second version number.

In step 1104, the first network interface card of the first device sends the first information to the second device by using the network connection.

Step 1105: The second device receives the first information, and sends an exception handling request to the first device based on the first information.

In some embodiments, the first information includes the first version number and the access result. When it is determined, based on the first version number, that the second physical memory page associated with the first virtual memory page is a shared physical memory page, the second device determines that the page fault occurs on the first virtual memory page, and sends the exception handling request to the first device. For example, in the first case, if the first version number is an odd number, it is determined that the second physical memory page associated with the first virtual memory page is a shared physical memory page, and the page fault occurs on the first virtual memory page; or in the second case, if the first version number is an even number, it is determined that the second physical memory page associated with the first virtual memory page is a shared physical memory page, and the page fault occurs on the first virtual memory page. Alternatively,

When the second device determines, based on the first version number, that the second physical memory page associated with the first virtual memory page is a physical memory page other than the shared physical memory page in the first memory, the second device determines that no page fault occurs on the first virtual memory page, and sends the access result to the second application. The process ends. For example, in the first case, if the first version number is an even number, it is determined that the second physical memory page associated with the first virtual memory page is a physical memory page other than the shared physical memory page in the first memory, and no page fault occurs on the first virtual memory page; or in the second case, if the first version number is an odd number, it is determined that the second physical memory page associated with the first virtual memory page is a physical memory page other than the shared physical memory page in the first memory, and no page fault occurs on the first virtual memory page.

In some embodiments, the first information includes the first version number, the access result, and the second version number. When it is determined, based on the first version number, that the second physical memory page associated with the first virtual memory page is a shared physical memory page, the second device determines that the page fault occurs on the first virtual memory page, and sends the exception handling request to the first device. Alternatively,

When the second device determines, based on the first version number, that the second physical memory page associated with the first virtual memory page is a physical memory page other than the shared physical memory page in the first memory, and the first version number is different from the second version number, the second device determines that the access result is unexpected, and sends the exception handling request to the first device.

When the second device determines, based on the first version number, that the second physical memory page associated with the first virtual memory page is a physical memory page other than the shared physical memory page in the first memory, and the first version number is the same as the second version number, the second device determines that no page fault occurs on the first virtual memory page and the access result is not unexpected, and sends the access result to the second application. The process ends.

In some embodiments, the exception handling request includes the identification information of the first virtual memory page and identification information of the second virtual memory page.

Step 1106: The first device receives the exception handling request, and allocates, in the first memory based on the exception handling request, a first physical memory page associated with the first virtual memory page. The first physical memory page is a physical memory page corresponding to the first data.

With reference to FIG. 6, the first access request is a read request, and the first device receives the exception handling request, selects a physical memory page from the first memory as the first physical memory page based on the exception handling request, reads, from a first hard disk based on the identification information of the first virtual memory page, the first data corresponding to the first virtual memory page, and stores the first data in the first physical memory page. Identification information of the shared physical memory page associated with the first virtual memory page is updated to the identification information of the first physical memory page in the first correspondence based on the identification information of the first virtual memory page. In this way, the first physical memory page associated with the first virtual memory page is allocated in the first memory.

With reference to FIG. 8, the first access request is a write request, and the first device receives the exception handling request, and selects a physical memory page from the first memory as the first physical memory page based on the exception handling request. Identification information of the shared physical memory page associated with the first virtual memory page is updated to the identification information of the first physical memory page in the first correspondence based on the identification information of the first virtual memory page. In this way, the first physical memory page associated with the first virtual memory page is allocated in the first memory.

Step 1107: The first device accesses the first physical memory page to obtain an access result, and sends the access result to the second device.

In step 1107, the first network interface card of the first device reads the first data stored in the first physical memory page, and sends the first data to the second device. The access result includes the first data. The second network interface card of the second device receives the first data, and stores the first data in a physical memory page that is associated with the second virtual memory page and that is in the second memory.

In step 1107, the first network interface card of the first device writes the first data into the first physical memory page, and sends a write success response to the second device. The access result is the write success response. The second network interface card of the second device receives the write success response, and sends the write success response to the second application.

In this embodiment of this application, when the physical memory page associated with the first virtual memory page is a shared physical memory page, a page fault occurs on the first virtual memory page. The first device receives the first access request. The first read request includes the identification information of the first virtual memory page. The first device obtains the first version number of the first virtual memory page based on the identification information of the first virtual memory page and the third correspondence. The first version number indicates the physical memory page associated with the first virtual memory page. The first device sends the first information to the second device. The first information includes the first version number. In this way, after receiving the first information, the second device can determine in time based on the first version number in the first information that the page fault occurs on the first virtual memory page, and send the exception handling request to the first device. The first device allocates, based on the exception handling request, the first physical memory page associated with the first virtual memory page, and accesses the first physical memory page. In this way, the following is avoided: Only after waiting for a long time, the second device finds that the page fault occurs on the first virtual memory page, thereby improving efficiency of accessing the first data.

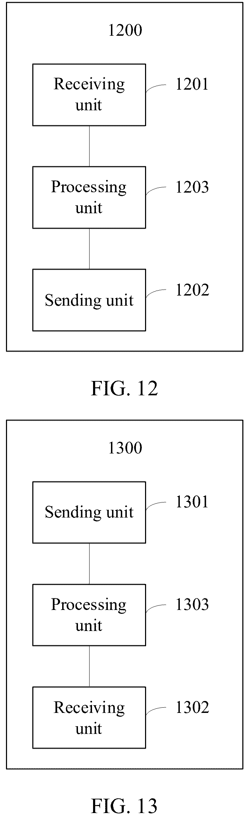

With reference to FIG. 12, an embodiment of this application provides a communication apparatus 1200. The apparatus 1200 is deployed on the first device in the network architecture 100 shown in FIG. 1 or FIG. 2, the first device in the method 300 shown in FIG. 3, the first device in the method 500 shown in FIG. 5, the first device in the method 700 shown in FIG. 7, the first device in the method 900 shown in FIG. 9, or the first device in the method 1100 shown in FIG. 11. The apparatus 1200 includes the following units.

A receiving unit 1201 is configured to receive a first access request sent by a second device. The first access request includes identification information of a first virtual memory page in the apparatus 1200. The first virtual memory page is a virtual memory page corresponding to first data to be accessed by the second device. The first virtual memory page is not associated with a physical memory page corresponding to the first data.

A sending unit 1202 is configured to send first information to the second device based on the identification information. The first information indicates that a page fault occurs on the first virtual memory page.

The receiving unit 1201 is further configured to receive an exception handling request sent by the second device based on the first information.

A processing unit 1203 is configured to allocate, based on the exception handling request, a first physical memory page that is associated with the first virtual memory page and that is in a memory of the apparatus 1200. The first physical memory page is a physical memory page corresponding to the first data.

The sending unit 1202 is configured to send, to the second device, a first access result of accessing the first physical memory page.

Optionally, for a detailed implementation process in which the receiving unit 1201 receives the first access request, refer to related content of step 502 in the method 500 shown in FIG. 5, step 702 in the method 700 shown in FIG. 7, or step 1102 in the method 1100 shown in FIG. 11. Details are not described herein again.

Optionally, for a detailed implementation process in which the sending unit 1202 sends the first information, refer to related content of step 504 in the method 500 shown in FIG. 5, step 707 in the method 700 shown in FIG. 7, or step 1104 in the method 1100 shown in FIG. 11. Details are not described herein again.

Optionally, for a detailed implementation process in which the processing unit 1203 allocates the first physical memory page associated with the first virtual memory page, refer to related content of step 507 in the method 500 shown in FIG. 5, step 710 in the method 700 shown in FIG. 7, or step 1106 in the method 1100 shown in FIG. 11. Details are not described herein again.

Optionally, for a detailed implementation process in which the sending unit 1202 sends the first access result, refer to related content of step 508 in the method 500 shown in FIG. 5, step 711 in the method 700 shown in FIG. 7, or step 1107 in the method 1100 shown in FIG. 11. Details are not described herein again.

Optionally, the first access request is a read request, the memory includes a first shared physical memory page, the first virtual memory page is associated with the first shared physical memory page, the first shared physical memory page is not a physical memory page corresponding to the first data, and the first shared physical memory page stores the first information.

The processing unit 1203 is further configured to read the first information from the first shared physical memory page based on the identification information.

The sending unit 1202 is configured to send the first information to the second device.

Optionally, for a detailed implementation process in which the processing unit 1203 reads the first information from the first shared physical memory page, refer to related content of step 503 in the method 500 shown in FIG. 5 or step 706 in the method 700 shown in FIG. 7. Details are not described herein again.

Optionally, for a detailed implementation process in which the sending unit 1202 sends the first information, refer to related content of step 504 in the method 500 shown in FIG. 5 or step 707 in the method 700 shown in FIG. 7. Details are not described herein again.

Optionally, the memory further includes a second shared physical memory page, the first virtual memory page is further associated with the second shared physical memory page, and the second shared physical memory page is not a physical memory page corresponding to the first data.

The receiving unit 1201 is further configured to receive a write request sent by the second device. The write request includes the identification information of the first virtual memory page and the first data.

The processing unit 1203 is further configured to write the first data into the second shared physical memory page based on the identification information.

The sending unit 1202 is further configured to send a write success response to the second device. The first information further indicates that the write success response is unexpected.

Optionally, for a detailed implementation process in which the receiving unit 1201 receives the write request, refer to related content of step 702 in the method 700 shown in FIG. 7. Details are not described herein again.

Optionally, for a detailed implementation process in which the processing unit 1203 writes the first data into the second shared physical memory page, refer to related content of step 703 in the method 700 shown in FIG. 7. Details are not described herein again.

Optionally, for a detailed implementation process in which the sending unit 1202 sends the write success response, refer to related content of step 704 in the method 700 shown in FIG. 7. Details are not described herein again.

Optionally, the memory includes a first shared physical memory page, the first virtual memory page is associated with the first shared physical memory page, and the first shared physical memory page is not a physical memory page corresponding to the first data.

The processing unit 1203 is further configured to obtain a first version number of the first virtual memory page based on the identification information. The first version number indicates the first shared physical memory page associated with the first virtual memory page.

The sending unit 1202 is configured to send the first information to the second device. The first information includes the first version number.

Optionally, for a detailed implementation process in which the processing unit 1203 obtains the first version number of the first virtual memory page, refer to related content of step 1102 in the method 1100 shown in FIG. 11. Details are not described herein again.

Optionally, for a detailed implementation process in which the sending unit 1202 sends the first information, refer to related content of step 1104 in the method 1100 shown in FIG. 11. Details are not described herein again.

Optionally, the receiving unit 1201 is further configured to receive a second access request sent by the second device. The second access request includes identification information of a second virtual memory page in the apparatus 1200. The second virtual memory page is a virtual memory page corresponding to second data to be accessed by the second device. The second virtual memory page is associated with a second physical memory page that corresponds to the second data and that is included in the memory.

The processing unit 1203 is further configured to obtain, based on the identification information of the second virtual memory page, a second version number, a second access result of accessing the second physical memory page, and a third version number. The second version number is a version number of the second virtual memory page before the second physical memory page is accessed. The third version number is a version number of the second virtual memory page after the second physical memory page is accessed.

The sending unit 1202 is further configured to send second information to the second device. The second information includes the second version number, the second access result, and the third version number. The second information is used to indicate the second device to determine, based on the second version number and the third version number, whether the second access result is unexpected.

Optionally, the processing unit is further configured to: in a process in which the processing unit accesses the second physical memory page, replace, with the first shared physical memory page, the second physical memory page associated with the second virtual memory page, and obtain a third version number of the second virtual memory page through addition based on the second version number.

Optionally, the memory further includes a third physical memory page, the third physical memory page is a physical memory page corresponding to the first data, and the first virtual memory page is associated with the third physical memory page. The processing unit 1203 is further configured to: when releasing the third physical memory page, replace, with the first shared physical memory page, the third physical memory page associated with the first virtual memory page.

In this embodiment of this application, the sending unit sends the first information to the second device based on the identification information. The first information indicates that the page fault occurs on the first virtual memory page. In this way, the second device finds, in time based on the first information, that the page fault occurs on the first virtual memory page, and sends the exception handling request to the apparatus. The processing unit processes the page fault based on the exception handling request. The first virtual memory page is associated with the first physical memory page corresponding to the first data. The apparatus accesses the first physical memory page associated with the first virtual memory page. The sending unit sends, to the second device, the access result of accessing the first physical memory page, to improve access efficiency.

With reference to FIG. 13, an embodiment of this application provides a communication apparatus 1300. The apparatus 1300 is deployed on the second device in the network architecture 100 shown in FIG. 1 or FIG. 2, the second device in the method 300 shown in FIG. 3, the second device in the method 500 shown in FIG. 5, the second device in the method 700 shown in FIG. 7, the second device in the method 900 shown in FIG. 9, or the second device in the method 1100 shown in FIG. 11. The apparatus 1300 includes the following units.

A sending unit 1301 is configured to send a first access request to a first device. The first access request includes identification information of a first virtual memory page in the first device. The first virtual memory page is a virtual memory page corresponding to first data to be accessed by the apparatus 1300. The first virtual memory page is not associated with a physical memory page corresponding to the first data.

A receiving unit 1302 is configured to receive first information sent by the first device based on the identification information. The first information indicates that a page fault occurs on the first virtual memory page.

The sending unit 1301 is further configured to send an exception handling request to the first device based on the first information. The exception handling request is used to request the first device to allocate, in a memory of the first device, a first physical memory page associated with the first virtual memory page. The first physical memory page is a physical memory page corresponding to the first data.

The receiving unit 1302 is further configured to receive a first access result that is of accessing the first physical memory page and that is sent by the first device.

Optionally, for a detailed implementation process in which the sending unit 1301 sends the first access request, refer to related content of step 501 in the method 500 shown in FIG. 5, step 701 in the method 700 shown in FIG. 7, or step 1101 in the method 1100 shown in FIG. 11. Details are not described herein again.

Optionally, for a detailed implementation process in which the receiving unit 1302 receives the first information, refer to related content of step 505 in the method 500 shown in FIG. 5, step 708 in the method 700 shown in FIG. 7, or step 1105 in the method 1100 shown in FIG. 11. Details are not described herein again.

Optionally, for a detailed implementation process in which the sending unit 1301 sends the exception handling request, refer to related content of step 506 in the method 500 shown in FIG. 5, step 709 in the method 700 shown in FIG. 7, or step 1105 in the method 1100 shown in FIG. 11. Details are not described herein again.

Optionally, the first access request is a read request, the memory includes a first shared physical memory page, the first virtual memory page is associated with the first shared physical memory page, the first shared physical memory page is not a physical memory page corresponding to the first data, the first shared physical memory page stores the first information, and the first information is read by the first device from the first shared physical memory page.

Optionally, the memory further includes a second shared physical memory page, the first virtual memory page is associated with the second shared physical memory page, and the second shared physical memory page is not a physical memory page corresponding to the first data. The apparatus 1300 further includes a first processing unit 1303.

The sending unit 1301 is further configured to send a write request to the first device. The write request includes the identification information of the first virtual memory page and the first data.

The receiving unit 1302 is further configured to receive a write success response sent by the first device. The write success response indicates that the first device successfully writes the first data into the second shared physical memory page.

The processing unit 1303 is configured to determine, based on the first information, that the write success response is unexpected.

Optionally, for a detailed implementation process in which the sending unit 1301 sends the write request to the first device, refer to related content of step 701 in the method 700 shown in FIG. 7. Details are not described herein again.

Optionally, for a detailed implementation process in which the receiving unit 1302 receives the write success response sent by the first device, refer to related content of step 708 in the method 700 shown in FIG. 7. Details are not described herein again.

Optionally, for a detailed implementation process in which the processing unit 1303 determines, based on the first information, that the write success response is unexpected, refer to related content of step 708 in the method 700 shown in FIG. 7. Details are not described herein again.

Optionally, the memory includes a first shared physical memory page, the first virtual memory page is associated with the first shared physical memory page, the first shared physical memory page is not a physical memory page corresponding to first data, the first information includes a first version number of the first virtual memory page, and the first version number indicates the first shared physical memory page associated with the first virtual memory page.

The sending unit 1301 is configured to send an exception handling request to the first device when it is determined, based on the first version number, that the page fault occurs on the first virtual memory page.

Optionally, for a detailed implementation process in which the sending unit 1301 sends the exception handling request, refer to related content of step 1105 in the method 1100 shown in FIG. 11. Details are not described herein again.

Optionally, the apparatus 1300 further includes the processing unit 1303.

The sending unit 1301 is further configured to send a second access request to the first device. The second access request includes identification information of a second virtual memory page in the first device. The second virtual memory page is a virtual memory page corresponding to second data to be accessed by the apparatus 1300. The second virtual memory page is associated with a second physical memory page that corresponds to the second data and that is in the memory.

The receiving unit 1302 is further configured to receive second information sent by the first device. The second information includes a second version number, a second access result of accessing the second physical memory page by the first device, and a third version number. The second version number is a version number of the second virtual memory page before the first device accesses the second physical memory page. The third version number is a version number of the second virtual memory page after the first device accesses the second physical memory page.

The processing unit 1303 is configured to determine, based on the second version number and the third version number, whether the second access result is unexpected.

In this embodiment of this application, the receiving unit receives the first information sent by the first device based on the identification information, and the first information indicates that the page fault occurs on the first virtual memory page. In this way, the processing unit finds, in time based on the first information, that the page fault occurs on the first virtual memory page, and the sending unit sends the exception handling request to the first device to request the first device to process the page fault. The first virtual memory page is associated with the first physical memory page corresponding to the first data. The first device accesses the first physical memory page associated with the first virtual memory page. The receiving unit receives the access result that is of accessing the first physical memory page and that is sent by the first device, to improve access efficiency.

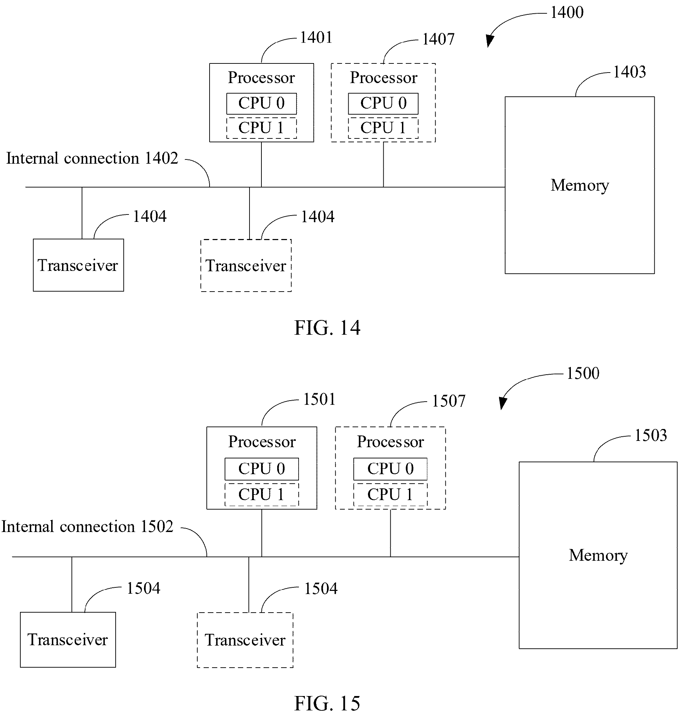

FIG. 14 is a diagram of a device 1400 according to an embodiment of this application. The device 1400 may be the first device according to any one of the foregoing embodiments, for example, may be the first device in the network architecture 100 shown in FIG. 1 or FIG. 2, the first device in the method 300 shown in FIG. 3, the first device in the method 500 shown in FIG. 5, the first device in the method 700 shown in FIG. 7, the first device in the method 900 shown in FIG. 9, or the first device in the method 1100 shown in FIG. 11. The device 1400 includes at least one processor 1401, an internal connection 1402, a memory 1403, and at least one transceiver 1404.

The device 1400 is an apparatus of a hardware structure, and may be configured to implement functional modules in the apparatus 1200 shown in FIG. 12. For example, a person skilled in the art may figure out that the processing unit 1203 in the apparatus 1200 shown in FIG. 12 may be implemented by the at least one processor 1401 by invoking code in the memory 1403, and the receiving unit 1201 and the sending unit 12021 in the apparatus 1200 shown in FIG. 12 may be implemented by the at least one transceiver 1404.

The device 1400 may be further configured to implement a function of the first device in any one of the foregoing embodiments.

The processor 1401 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of the solutions of this application.

The internal connection 1402 may include a path for transmitting information between the foregoing components. The internal connection 1402 may be a board, a bus, or the like.

The at least one transceiver 1404 is configured to communicate with another device or a communication network.

The memory 1403 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM) or a compact disc read-only memory (compact disc read-only memory, CD-ROM) or another compact disc storage, optical disc storage (including a compressed optical disc, a laser disc, an optical disc, a digital versatile optical disc, a Blu-ray disc, and the like), a magnetic disk storage medium, or another magnetic storage device, or any another medium that can be configured to carry or store expected program code in a form of an instruction structure or a data structure and that is accessible to a computer, but is not limited thereto. The memory may exist independently, and is connected to the processor through the bus. The memory may alternatively be integrated with the processor.

The memory 1403 is configured to store application code for executing the solutions of this application, and the execution is controlled by the processor 1401. The processor 1401 is configured to: execute the application program code stored in the memory 1403, and cooperate with the at least one transceiver 1404, so that the device 1400 implements a function in the method in this patent.

During specific implementation, in an embodiment, the processor 1401 may include one or more CPUs such as a CPU 0 and a CPU 1 in FIG. 14.

During specific implementation, in an embodiment, the device 1400 may include a plurality of processors, for example, the processor 1401 and a processor 1407 in FIG. 14. Each of the processors may be a single-core (single-CPU) processor, or may be a multi-core (multi-CPU) processor. The processor herein may be one or more devices, circuits, and/or processing cores configured to process data (for example, computer program instructions).

FIG. 15 is a diagram of a device 1500 according to an embodiment of this application. The device 1500 may be the second device according to any one of the foregoing embodiments, for example, may be the second device in the network architecture 100 shown in FIG. 1 or FIG. 2, the second device in the method 300 shown in FIG. 3, the second device in the method 500 shown in FIG. 5, the second device in the method 700 shown in FIG. 7, the second device in the method 900 shown in FIG. 9, or the second device in the method 1100 shown in FIG. 11. The device 1500 includes at least one processor 1501, an internal connection 1502, a memory 1503, and at least one transceiver 1504.

The device 1500 is an apparatus of a hardware structure, and may be configured to implement functional modules in the apparatus 1300 shown in FIG. 13. For example, a person skilled in the art may figure out that the processing unit 1303 in the apparatus 1300 shown in FIG. 13 may be implemented by the at least one processor 1501 by invoking code in the memory 1503, and the sending unit 1301 and the receiving unit 1302 in the apparatus 1300 shown in FIG. 13 may be implemented by the at least one transceiver 1504.

The device 1500 may be further configured to implement a function of the second device in any one of the foregoing embodiments.

The processor 1501 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of the solutions of this application.

The internal connection 1502 may include a path for transmitting information between the foregoing components. The internal connection 1502 may be a board, a bus, or the like.

The at least one transceiver 1504 is configured to communicate with another device or a communication network.

The memory 1503 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM) or a compact disc read-only memory (compact disc read-only memory, CD-ROM) or another compact disc storage, optical disc storage (including a compressed optical disc, a laser disc, an optical disc, a digital versatile optical disc, a Blu-ray disc, and the like), a magnetic disk storage medium, or another magnetic storage device, or any another medium that can be configured to carry or store expected program code in a form of an instruction structure or a data structure and that is accessible to a computer, but is not limited thereto. The memory may exist independently, and is connected to the processor through the bus. The memory may alternatively be integrated with the processor.

The memory 1503 is configured to store application code for executing the solutions of this application, and the execution is controlled by the processor 1501. The processor 1501 is configured to: execute the application program code stored in the memory 1503, and cooperate with the at least one transceiver 1504, so that the device 1500 implements a function in the method in this patent.

During specific implementation, in an embodiment, the processor 1501 may include one or more CPUs such as a CPU 0 and a CPU 1 in FIG. 15.

During specific implementation, in an embodiment, the device 1500 may include a plurality of processors, for example, the processor 1501 and a processor 1507 in FIG. 15. Each of the processors may be a single-core (single-CPU) processor, or may be a multi-core (multi-CPU) processor. The processor herein may be one or more devices, circuits, and/or processing cores configured to process data (for example, computer program instructions).

With reference to FIG. 1 or FIG. 2, an embodiment of this application provides a communication system. The system includes the apparatus 1200 shown in FIG. 12 and the apparatus 1300 shown in FIG. 13, or the system includes the device 1400 shown in FIG. 14 and the device 1500 shown in FIG. 15.

The apparatus 1200 shown in FIG. 12 or the apparatus 1400 shown in FIG. 14 may be a first device 101, and the apparatus 1300 shown in FIG. 13 or the device 1500 shown in FIG. 15 may be a second device 102.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

The foregoing descriptions are only optional embodiments of this application, but are not intended to limit this application. Any modification, equivalent replacement, or improvement made within the principle of this application should fall within the protection scope of this application.

## Claims

1. A communication method, wherein the method comprises:
receiving, by a first device, a first access request sent by a second device, wherein the first access request comprises identification information of a first virtual memory page in the first device, the first virtual memory page is a virtual memory page corresponding to first data to be accessed by the second device, and the first virtual memory page is not associated with a physical memory page corresponding to the first data;
sending, by the first device, first information to the second device based on the identification information, wherein the first information indicates that a page fault occurs on the first virtual memory page;
receiving, by the first device, an exception handling request that is sent by the second device based on the first information;
allocating, by the first device based on the exception handling request, a first physical memory page that is associated with the first virtual memory page and that is in a memory of the first device, wherein the first physical memory page is a physical memory page corresponding to the first data; and
sending, by the first device to the second device, a first access result of accessing the first physical memory page.

2. The method according to claim 1, wherein the first access request is a read request, the memory comprises a first shared physical memory page, the first virtual memory page is associated with the first shared physical memory page, the first shared physical memory page is not a physical memory page corresponding to the first data, and the first shared physical memory page stores the first information; and
the sending, by the first device, first information to the second device based on the identification information comprises:
reading, by the first device, the first information from the first shared physical memory page based on the identification information; and
sending, by the first device, the first information to the second device.

3. The method according to claim 2, wherein the memory further comprises a second shared physical memory page, the first virtual memory page is further associated with the second shared physical memory page, the second shared physical memory page is not a physical memory page corresponding to the first data, and before the first device receives the read request, the method further comprises:
receiving, by the first device, a write request sent by the second device, wherein the write request comprises the identification information of the first virtual memory page and the first data;
writing, by the first device, the first data into the second shared physical memory page based on the identification information; and
sending, by the first device, a write success response to the second device, wherein the first information further indicates that the write success response is unexpected.

4. The method according to claim 1, wherein the memory comprises a first shared physical memory page, the first virtual memory page is associated with the first shared physical memory page, and the first shared physical memory page is not a physical memory page corresponding to the first data; and
the sending, by the first device, first information to the second device based on the identification information comprises:
obtaining, by the first device, a first version number of the first virtual memory page based on the identification information, wherein the first version number indicates the first shared physical memory page associated with the first virtual memory page; and
sending, by the first device, the first information to the second device, wherein the first information comprises the first version number.

5. The method according to claim 4, wherein the method further comprises:
receiving, by the first device, a second access request sent by the second device, wherein the second access request comprises identification information of a second virtual memory page in the first device, the second virtual memory page is a virtual memory page corresponding to second data to be accessed by the second device, and the second virtual memory page is associated with a second physical memory page that corresponds to the second data and that is comprised in the memory;
obtaining, by the first device based on the identification information of the second virtual memory page, a second version number, a second access result of accessing the second physical memory page, and a third version number, wherein the second version number is a version number of the second virtual memory page before the second physical memory page is accessed, and the third version number is a version number of the second virtual memory page after the second physical memory page is accessed; and
sending, by the first device, second information to the second device, wherein the second information comprises the second version number, the second access result, and the third version number, and the second information is used to indicate the second device to determine, based on the second version number and the third version number, whether the second access result is unexpected.

6. The method according to claim 5, wherein the method further comprises:
in a process in which the first device accesses the second physical memory page, replacing, with the first shared physical memory page by the first device, the second physical memory page associated with the second virtual memory page, and obtaining the third version number of the second virtual memory page through addition based on the second version number.

7. The method according to any one of claims 2 to 6, wherein the memory further comprises a third physical memory page, the third physical memory page is a physical memory page corresponding to the first data, the first virtual memory page is associated with the third physical memory page, and the method further comprises:
when releasing the third physical memory page, replacing, with the first shared physical memory page by the first device, the third physical memory page associated with the first virtual memory page.

8. A communication method, wherein the method comprises:
sending, by a second device, a first access request to a first device, wherein the first access request comprises identification information of a first virtual memory page in the first device, the first virtual memory page is a virtual memory page corresponding to first data to be accessed by the second device, and the first virtual memory page is not associated with a physical memory page corresponding to the first data;
receiving, by the second device, first information sent by the first device based on the identification information, wherein the first information indicates that a page fault occurs on the first virtual memory page
sending, by the second device, an exception handling request to the first device based on the first information, wherein the exception handling request is used to request the first device to allocate, in a memory of the first device, a first physical memory page associated with the first virtual memory page, and the first physical memory page is a physical memory page corresponding to the first data; and
receiving, by the second device, a first access result that is of accessing the first physical memory page and that is sent by the first device.

9. The method according to claim 8, wherein the first access request is a read request, the memory comprises a first shared physical memory page, the first virtual memory page is associated with the first shared physical memory page, the first shared physical memory page is not a physical memory page corresponding to the first data, the first shared physical memory page stores the first information, and the first information is read by the first device from the first shared physical memory page.

10. The method according to claim 9, wherein the memory further comprises a second shared physical memory page, the first virtual memory page is associated with the second shared physical memory page, the second shared physical memory page is not a physical memory page corresponding to the first data, and the method further comprises:
sending, by the second device, a write request to the first device, wherein the write request comprises the identification information of the first virtual memory page and the first data;
receiving, by the second device, a write success response sent by the first device, wherein the write success response indicates that the first device successfully writes the first data into the second shared physical memory page; and
determining, by the second device based on the first information, that the write success response is unexpected.

11. The method according to claim 8, wherein the memory comprises a first shared physical memory page, the first virtual memory page is associated with the first shared physical memory page, the first shared physical memory page is not a physical memory page corresponding to the first data, the first information comprises a first version number of the first virtual memory page, and the first version number indicates the first shared physical memory page associated with the first virtual memory page; and
the sending, by the second device, an exception handling request to the first device based on the first information comprises:
sending, by the second device, the exception handling request to the first device when it is determined, based on the first version number, that the page fault occurs on the first virtual memory page.

12. The method according to claim 11, wherein the method further comprises:
sending, by the second device, a second access request to the first device, wherein the second access request comprises identification information of a second virtual memory page in the first device, the second virtual memory page is a virtual memory page corresponding to second data to be accessed by the second device, and the second virtual memory page is associated with a second physical memory page that corresponds to the second data and that is in the memory;
receiving, by the second device, second information sent by the first device, wherein the second information comprises a second version number, a second access result of accessing the second physical memory page by the first device, and a third version number, the second version number is a version number of the second virtual memory page before the first device accesses the second physical memory page, and the third version number is a version number of the second virtual memory page after the first device accesses the second physical memory page; and
determining, by the second device based on the second version number and the third version number, whether the second access result is unexpected.

13. A communication apparatus, wherein the apparatus comprises:
a receiving unit, configured to receive a first access request sent by a second device, wherein the first access request comprises identification information of a first virtual memory page in the apparatus, the first virtual memory page is a virtual memory page corresponding to first data to be accessed by the second device, and the first virtual memory page is not associated with a physical memory page corresponding to the first data;
a sending unit, configured to send first information to the second device based on the identification information, wherein the first information indicates that a page fault occurs on the first virtual memory page, and
the receiving unit is further configured to receive an exception handling request sent by the second device based on the first information; and
a processing unit, configured to allocate, based on the exception handling request, a first physical memory page that is associated with the first virtual memory page and that is in a memory of the apparatus, wherein the first physical memory page is a physical memory page corresponding to the first data, and
the sending unit is configured to send, to the second device, a first access result of accessing the first physical memory page.

14. The apparatus according to claim 13, wherein the first access request is a read request, the memory comprises a first shared physical memory page, the first virtual memory page is associated with the first shared physical memory page, the first shared physical memory page is not a physical memory page corresponding to the first data, and the first shared physical memory page stores the first information;
the processing unit is further configured to read the first information from the first shared physical memory page based on the identification information; and
the sending unit is configured to send the first information to the second device.

15. The apparatus according to claim 14, wherein the memory further comprises a second shared physical memory page, the first virtual memory page is further associated with the second shared physical memory page, and the second shared physical memory page is not a physical memory page corresponding to the first data;
the receiving unit is further configured to receive a write request sent by the second device, wherein the write request comprises the identification information of the first virtual memory page and the first data;
the processing unit is further configured to write the first data into the second shared physical memory page based on the identification information; and
the sending unit is further configured to send a write success response to the second device, wherein the first information further indicates that the write success response is unexpected.

16. The apparatus according to claim 13, wherein the memory comprises a first shared physical memory page, the first virtual memory page is associated with the first shared physical memory page, and the first shared physical memory page is not a physical memory page corresponding to the first data;
the processing unit is further configured to obtain a first version number of the first virtual memory page based on the identification information, wherein the first version number indicates the first shared physical memory page associated with the first virtual memory page; and
the sending unit is configured to send the first information to the second device, wherein the first information comprises the first version number.

17. The apparatus according to claim 16, wherein
the receiving unit is further configured to receive a second access request sent by the second device, wherein the second access request comprises identification information of a second virtual memory page in the apparatus, the second virtual memory page is a virtual memory page corresponding to second data to be accessed by the second device, and the second virtual memory page is associated with a second physical memory page that corresponds to the second data and that is comprised in the memory;
the processing unit is further configured to obtain, based on the identification information of the second virtual memory page, a second version number, a second access result of accessing the second physical memory page, and a third version number, wherein the second version number is a version number of the second virtual memory page before the second physical memory page is accessed, and the third version number is a version number of the second virtual memory page after the second physical memory page is accessed; and
the sending unit is further configured to send second information to the second device, wherein the second information comprises the second version number, the second access result, and the third version number, and the second information is used to indicate the second device to determine, based on the second version number and the third version number, whether the second access result is unexpected.

18. The apparatus according to claim 17, wherein
the processing unit is further configured to: in a process in which the processing unit accesses the second physical memory page, replace, with the first shared physical memory page, the second physical memory page associated with the second virtual memory page, and obtain the third version number of the second virtual memory page through addition based on the second version number.

19. The apparatus according to any one of claims 14 to 18, wherein the memory further comprises a third physical memory page, the third physical memory page is a physical memory page corresponding to the first data, the first virtual memory page is associated with the third physical memory page, and the processing unit is further configured to: when releasing the third physical memory page, replace, with the first shared physical memory page, the third physical memory page associated with the first virtual memory page.

20. A communication apparatus, wherein the apparatus comprises:
a sending unit, configured to send a first access request to a first device, wherein the first access request comprises identification information of a first virtual memory page in the first device, the first virtual memory page is a virtual memory page corresponding to first data to be accessed by the apparatus, and the first virtual memory page is not associated with a physical memory page corresponding to the first data; and
a receiving unit, configured to receive first information sent by the first device based on the identification information, wherein the first information indicates that a page fault occurs on the first virtual memory page;
the sending unit is further configured to send an exception handling request to the first device based on the first information, wherein the exception handling request is used to request the first device to allocate, in a memory of the first device, a first physical memory page associated with the first virtual memory page, and the first physical memory page is a physical memory page corresponding to the first data; and
the receiving unit is further configured to receive a first access result that is of accessing the first physical memory page and that is sent by the first device.

21. The apparatus according to claim 20, wherein the first access request is a read request, the memory comprises a first shared physical memory page, the first virtual memory page is associated with the first shared physical memory page, the first shared physical memory page is not a physical memory page corresponding to the first data, the first shared physical memory page stores the first information, and the first information is read by the first device from the first shared physical memory page.

22. The apparatus according to claim 21, wherein the memory further comprises a second shared physical memory page, the first virtual memory page is associated with the second shared physical memory page, the second shared physical memory page is not a physical memory page corresponding to the first data, and the apparatus further comprises a first processing unit;
the sending unit is further configured to send a write request to the first device, wherein the write request comprises the identification information of the first virtual memory page and the first data;
the receiving unit is further configured to receive a write success response sent by the first device, wherein the write success response indicates that the first device successfully writes the first data into the second shared physical memory page; and
the first processing unit is configured to determine, based on the first information, that the write success response is unexpected.

23. The apparatus according to claim 20, wherein the memory comprises a first shared physical memory page, the first virtual memory page is associated with the first shared physical memory page, the first shared physical memory page is not a physical memory page corresponding to the first data, the first information comprises a first version number of the first virtual memory page, and the first version number indicates the first shared physical memory page associated with the first virtual memory page; and
the sending unit is configured to send an exception handling request to the first device when it is determined, based on the first version number, that the page fault occurs on the first virtual memory page.

24. The apparatus according to claim 23, wherein the apparatus further comprises a second processing unit;
the sending unit is further configured to send a second access request to the first device, wherein the second access request comprises identification information of a second virtual memory page in the first device, the second virtual memory page is a virtual memory page corresponding to second data to be accessed by the apparatus, and the second virtual memory page is associated with a second physical memory page that corresponds to the second data and that is in the memory;
the receiving unit is further configured to receive second information sent by the first device, wherein the second information comprises a second version number, a second access result of accessing the second physical memory page by the first device, and a third version number, the second version number is a version number of the second virtual memory page before the first device accesses the second physical memory page, and the third version number is a version number of the second virtual memory page after the first device accesses the second physical memory page; and
the second processing unit is further configured to determine, based on the second version number and the third version number, whether the second access result is unexpected.

25. A communication apparatus, comprising at least one processor, wherein the at least one processor is configured to: couple to a memory, and read and execute instructions in the memory, to implement the method according to any one of claims 1 to 7.

26. A communication apparatus, comprising at least one processor, wherein the at least one processor is configured to: couple to a memory, and read and execute instructions in the memory, to implement the method according to any one of claims 8 to 12.

27. A communication system, comprising the apparatus according to any one of claims 13 to 19 and the apparatus according to any one of claims 20 to 24, or comprising the apparatus according to claim 25 and the apparatus according to claim 26.

28. A computer-readable storage medium, wherein the computer-readable storage medium stores a computer program, and when the computer program is executed by a computer, the method according to any one of claims 1 to 12 is implemented.
